(19) Europäisches Patentamt
European Patent Office
Office européen des brevets

(11) EP 0 992 883 B1

(12) **EUROPEAN PATENT SPECIFICATION**

(45) Date of publication and mention of the grant of the patent:
**19.05.2004 Bulletin 2004/21**

(51) Int Cl.[7]: **G06F 7/48**, G06F 7/544

(21) Application number: **98402458.8**

(22) Date of filing: **06.10.1998**

# (54) Rounding mechanism

Rundungsmechanismus

Mécanisme d'arrondissement

(84) Designated Contracting States:
**DE FI FR GB SE**

(43) Date of publication of application:
**12.04.2000 Bulletin 2000/15**

(73) Proprietors:
- **TEXAS INSTRUMENTS INC.**
  **Dallas, Texas 75243 (US)**
  Designated Contracting States:
  **DE FI GB SE**
- **TEXAS INSTRUMENTS FRANCE**
  **06271 Villeneuve Loubet Cédex (FR)**
  Designated Contracting States:
  **FR**

(72) Inventors:
- **Lombardot, Anne**
  **06740 Chateau neuf de Grasse (FR)**
- **Giacalone, Jean-Pierre**
  **06140 Vence (FR)**
- **Theodorou, Francois**
  **06800 Cagnes-sur-Mer (FR)**

(74) Representative: **Harris, Ian Richard et al**
**D. Young & Co.,**
**21 New Fetter Lane**
**London EC4A 1DA (GB)**

(56) References cited:
**EP-A- 0 469 841** **US-A- 5 128 889**

- **R. OWEN: "A SUB 10 NANOSECOND MULTIPLIER AND MULTIPLIER-ACCUMULATOR" WESCON CONVENTION RECORD., vol. 30, 18 - 20 November 1986, pages 14/5 1-5, XP002093109 NORTH HOLLYWOOD US**
- **HILLMAN G D: "DSP56200: AN ALGORITHM-SPECIFIC DIGITAL SIGNAL PROCESSOR PERIPHERAL" PROCEEDINGS OF THE IEEE, vol. 75, no. 9, September 1987, pages 1185-1191, XP000031791**

EP 0 992 883 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

The present invention relates to rounding techniques for arithmetic operations in processing engines.

Conventional rounding operations require a rounding up or rounding down depending on whether a final calculation result exceeds or is less than a threshold. For example, consider a situation where calculations results from a Multiply and Accumulate unit (MAC) are rounded to a given degree of accuracy or with a predetermined number of significant digits

Where a calculation result is between adjacent values at the predetermined number of significant digits, say X.Y, where X.Y is a value between X and X+1, and X is an arbitrary value at a predetermined accuracy or number of significant digits. In simple terms, a decision could be made always to round down to X or to round up to X+1. However, more typically, a rounding is made to the nearest value at the predetermined accuracy. Accordingly if the calculation result is greater than X.5, rounding is made to the next higher value, namely X+1. If the calculation result is less than X.5, rounding is made to the next lower value, namely X. This leaves, however, the question open as to how to treat a calculation result which is exactly X.5. Typically, processors have employed a solution where X.5 is either always rounded up to X+1, or alternatively rounded down to X. It will be appreciated that these rounding solutions add a bias to the overall calculation of the calculation. Although in isolation this is typically not significant, if the calculation resulting in the rounding from X.5 is computed very often, which can happen in applications where many repetitions occur, this can lead to the insignificant bias becoming significant.

According there is a need for a new approach to rounding which can provide unbiased rounding in an efficient manner. The present invention seeks to achieve this.

European Patent Application Publication Number EP0 469 841 describes a data round-off device. That device performs rounding by directly examining a set of least significant bits of a result signal using a pair of gates to determine the condition of the least significant bits of the completed result value. One of the gates provides a signal to an adder that is added to the higher 4 bits (a most significant portion) of the input signal; thus the output of the detection circuit is simply added to a most significant portion of the result in order to form a rounded result.

SUMMARY OF THE INVENTION

Particular and preferred aspects of the invention are set out in the accompanying independent and dependent claims.

A first aspect of the invention is defined in independent claim 1 and concerns an arithmetic unit for a processing engine, the arithmetic unit comprising: arithmetic logic for performing an arithmetic operation to generate an arithmetic result; zero anticipation logic for anticipating a logical zero on N least significant bits of the result; rounding logic for forcing the N least significant bits of the result to zero; and unbiased rounding logic for forcing a predetermined logic value on the (N+1)th least significant bit of the result, the unbiased rounding circuitry being responsive to a zero anticipation output signal from the zero anticipation circuitry.

Through the use of zero anticipation logic to predict, or anticipate zeros on the N least significant bits, an embodiment of the invention is able to provide unbiased rounding without any time penalty.

In an embodiment of the invention, the zero anticipation tree includes a carry propagation tree responsive to carry results of the arithmetic logic (arithmetic circuitry) for anticipating a zero on each of N least significant bits of an arithmetic result. A zero anticipation output signal is generated. The unbiased rounding logic (unbiased rounding circuitry, for example a multiplex) is responsive to this output signal for forcing the (N+1)the least significant bit of the result to logical zero where a logic zero is anticipated on N lowest significant bits of the result. A carry propagation tree can be configured to be at least as rapid as the carry propagation of, for example, a final adder of the arithmetic logic.

The execution unit could, by way of examples, be a Multiply and ACcumulate (MAC) unit, or a floating point unit rounding to the nearest sticky bit definition, or a fixed point unit with overflow anticipation.

In an embodiment of the invention which also provides zero anticipation, this function can also be mapped onto the carry propagation tree providing an efficient hardware implementation through sharing of the hardware between functions.

Preferably, the unbiased rounding is a selectable function, the unbiased rounding logic being selectively operable to provide this function for individual instructions.

In an embodiment of the invention, a logic stage connected between the partial product reduction tree and the final adder is responsive to the output signal from the carry propagation tree to force the (N+1)th least significant bit to logical zero. The logic stage can additionally be responsive to an unbiased rounding select signal selectively to enable forcing of the (N+1)th bit to zero.

In a particular embodiment of the invention for a 17-by-17 bit fixed point multiplier accumulator with accumulation on 40 bits, N is 16.

The partial product reduction tree of a particular embodiment of the invention is formed from a Wallace compression reduction network. For generating the partial products, a Booth partial product generation stage is also provided.

In accordance with another aspect of the invention, there is provided an integrated processing engine comprising at least one arithmetic unit as set out above. The integrated processing engine of a particular embodiment of the invention is a digital signal processor. However, the processing engine may take other forms, such as, for example, a microprocessor.

The digital signal processor finds particular application to telecommunications apparatus, for example GSM (Global System for Mobiles) apparatus where unbiased rounding is required for some computations. Accordingly, in accordance with a further aspect of the invention, there is provided a telecommunications device comprising a data input device, a display, and antenna and an integrated processing engine as set out above.

A second aspect of the invention is defined in independent claim 17 and concerns a method for unbiased rounding in an arithmetic unit of a processing engine, the method comprising performing an arithmetic operation to generate an arithmetic result; anticipating a logical zero on N least significant bits of the result; rounding the result by forcing the N least significant bits of the result to zero; and forcing a predetermined logical value on the (N+1)th least significant bit of the result where a logic zero is anticipated no N least significant bits of the result.

## BRIEF DESCRIPTION OF THE DRAWINGS

Particular embodiments in accordance with the invention will now be described, by way of example only, and with reference to the accompanying drawings in which like reference signs are used to denote like parts, unless otherwise stated, and in which:

Figure 1 is a schematic block diagram of a processor incorporating an embodiment of the invention;
Figure 2 is a schematic diagram of a core of the processor of Figure 1;
Figure 3 is a more detailed schematic block diagram of various execution units of the core of the processor of Figure 1;
Figure 4 is schematic diagram of an instruction buffer queue and an instruction decoder controller of the processor of Figure 1;
Figure 5 is a representation of pipeline phases of the processor of Figure 1;
Figure 6 is a diagrammatic illustration of an example of operation of a pipeline in the processor of Figure 1;
Figure 7 is a schematic representation of the core of the processor for explaining the operation of the pipeline of the processor of Figure 1;
Figure 8 is a schematic overview of a Multiply and Accumulate (MAC) unit;
Figure 9 shows the MAC in more detail;
Figure 10 is a Table representing a Booth encoder;
Figures 11A, 11B and 11C show a gate level implementation encoder stages for the Booth encoder of Figure 10;
Figure 12 is a Table describing a leaf node for one bit of a partial product;
Figure 13A, 13B, 13C and 13D represent the logic of leaf nodes;
Figure 14 illustrates partial product alignment and reduction;
Figure 15 illustrates the logic of a Wallace compressor stage;
Figure 16 illustrates saturation mode control;
Figure 17 illustrates logic for decoding special operands;
Figure 18 depicts the arrival profile for partial product reduction;
Figure 19 is a state machine of a zero result anticipation mechanism;
Figures 20A and 20B are schematic representations of examples of structures for a zero detection mechanism;
Figure 21 is a schematic representation of a first type of cell of the zero detection mechanism of Figure 20B;
Figure 22 is a schematic representation of a second type of cell of the zero detection mechanism of Figure 20B;
Figure 23 is an example of logic for implementing the first type of cell of Figure 21;
Figure 24 is an example of logic for implementing the second type of cell of Figure 22;
Figure 25 is a schematic block diagram representing another example of a zero detection mechanism incorporated in an embodiment of the invention;
Figure 26 is a schematic block diagram illustrating the implementation of the zero detection mechanism in the MAC of Figure 8;
Figure 27 describes a circuit for detecting overflow for extension bits;
Figures 28A-28C describe cells of a saturation stage of the MAC of Figure 8 including a cell for providing unbiased rounding;

Figures 29A-29C illustrate the effect of unbiased rounding;
Figure 30 is a schematic block diagram of overflow detection circuitry;
Figure 31 is a schematic representation of an integrated circuit incorporating the processor of Figure 1; and
Figure 32 is a schematic representation of a mobile telecommunications device incorporating the processor of Figure 1.

DESCRIPTION OF PARTICULAR EMBODIMENTS

Although the invention finds particular application to Digital Signal Processors (DSPs), implemented for example in an Application Specific Integrated Circuit (ASIC), it also finds application to other forms of processing engines.
The basic architecture of an example of a processor incorporating the invention will now be described.
Figure 1 is a schematic overview of a processor 10 forming an exemplary embodiment of the present invention. The processor 10 includes a processing engine ) 100 and a processor backplane 20. In the present embodiment, the processor is a Digital Signal Processor 10 implemented in an Application Specific Integrated Circuit (ASIC).
As shown in Figure 1, the processing engine 100 forms a central processing unit (CPU) with a processing core 102 and a memory interface, or management, unit 104 for interfacing the processing core 102 with memory units external to the processor core 102.
The processor backplane 20 comprises a backplane bus 22, to which the memory management unit 104 of the processing engine is connected. Also connected to the backplane bus 22 is an instruction cache memory 24, peripheral devices 26 and an external interface 28.
It will be appreciated that in other embodiments, the invention could be implemented using different configurations and/or different technologies. For example, the processing engine 100 could form the processor 10, with the processor backplane 20 being separate therefrom. The processing engine 100 could. for example be a DSP separate from and mounted on a backplane 20 supporting a backplane bus 22, peripheral and external interfaces. The processing engine 100 could, for example, be a microprocessor rather than a DSP and could be implemented in technologies other than ASIC technology. The processing engine, or a processor including the processing engine, could be implemented in one or more integrated circuits.
Figure 2 illustrates the basic structure of an embodiment of the processing core 102. As illustrated, the processing core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.
Figure 3 illustrates the P Unit 108, A Unit 110 and D Unit 112 of the processing core 102 in more detail and shows the bus structure connecting the various elements of the processing core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write busses (EB, FB) 130, 132, Data Read busses (CB, DB) 134, 136 and a coefficient program bus (BB) 138. Additionally, the P Unit 108 is coupled to sub-units within the A Unit 110 and D Unit 112 via various busses labeled CSR, ACB and RGD.
As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, ..., DR3) which may also be used for data flow as well as address generation. Additionally, the register file includes 16 bit circular buffer registers and 7 bit data page registers. As well as the general purpose busses (EB, FB, CB, DB) 130, 132, 134, 136, a coefficient data bus 140 and a coefficient address bus 142 are coupled to the A Unit register file 30. The A Unit register file 30 is coupled to the A Unit DAGEN unit 32 by unidirectional busses 144 and 146 respectively operating in opposite directions. The DAGEN unit 32 includes 16 bit X/Y registers and coefficient and stack pointer registers, for example for controlling and monitoring address generation within the processing engine 100.
The A Unit 110 also comprises the ALU 34 which includes a shifter function as well as the functions typically associated with an ALU such as addition. subtraction, and AND, OR and XOR logical operators. The ALU 34 is also coupled to the general-purpose busses (EB, DB) 130, 136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.
As illustrated, the D Unit 112 includes a D Unit register file 36, a D Unit ALU 38, a D Unit shifter 40 and two multiply and accumulate units (MAC1, MAC2) 42 and 44. The D Unit register file 36, D Unit ALU 38 and D Unit shifter 40 are coupled to busses (EB, FB, CB, DB and KDB) 130, 132, 134, 136 and 140, and the MAC units 42 and 44 are coupled to the busses (CB, DB, KDB) 134, 136, 140 and data read bus (BB) 144. The D Unit register file 36 includes 40-bit accumulators (AC0, ..., AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write busses (ACW0, ACW1) 146, 148, and from the D Unit shifter 40 over accumulator write bus (ACW1) 148. Data is read from the D Unit register file accumulators to the D Unit ALU 38, D Unit shifter 40 and MACs 1&2 42, 44 over accumulator read busses (ACR0, ACR1) 150, 152. The D Unit ALU 38 and D Unit shifter 40 are also coupled to sub-units of the A Unit 108 via various busses labeled EFC, DRB, DR2 and ACB.

Referring now to Figure 4, there is illustrated an instruction buffer unit 106 comprising a 32 word instruction buffer queue (IBQ) 502. The IBQ 502 comprises 32×16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder(s) 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder(s) 512 and 514.

The instructions are formed into a 48-bit word and are loaded into the instruction decoders 512, 514 over a 48-bit bus 516 via multiplexors 520 and 521. It will be apparent to a person of ordinary skill in the art that the instructions may be formed into words comprising other than 48-bits, and that the present invention is not limited to the specific embodiment described above.

The bus 516 can load a maximum of two instructions, one per decoder, during any one instruction cycle. The combination of instructions may be in any combination of formats, 8, 16, 24, 32, 40 and 48 bits, which will fit across the 48-bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decoding thereof. The multiplexing associated with the alignment of instructions with byte boundaries is performed in multiplexors 520 and 521.

The processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface, or memory management unit 104.

In the next stage, FETCH (P1) stage 204, the program memory is read and the I Unit 106 is filled via the PB bus 122 from the memory management unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is output and the memory operand, the address of which has been generated in a DAGEN X operator with an Xmem indirect addressing mode. is then READ from indirectly addressed X memory (Xmem).

The next stage of the pipeline is the READ (P5) stage 212 in which a memory operand, the address of which has been generated in a DAGEN Y operator with an Ymem indirect addressing mode or in a DAGEN C operator with coefficient address mode, is READ. The address of the memory location to which the result of the instruction is to be written is output.

In the case of dual access, read operands can also be generated in the Y path. and write operands in the X path.

Finally, there is an execution EXEC (P6) stage 214 in which the instruction is executed in either the A Unit 110 or the D Unit 112. The result is then stored in a data register or accumulator, or written to memory for Read/Modify/Write or store instructions. Additionally, shift operations are performed on data in accumulators during the EXEC stage.

The basic principle of operation for a pipeline processor will now be described with reference to Figure 6. As can be seen from Figure 6, for a first instruction 302, the successive pipeline stages take place over time periods $T_1$-$T_7$. Each time period is a clock cycle for the processor machine clock. A second instruction 304, can enter the pipeline in period $T_2$, since the previous instruction has now moved on to the next pipeline stage. For instruction 3, 306, the PRE-FETCH stage 202 occurs in time period $T_3$. As can be seen from Figure 6 for a seven stage pipeline a total of 7 instructions may be processed simultaneously. Figure 6 shows all 7 instructions 302-314 being processed in time period $T_7$. Such a structure adds a form of parallelism to the processing of instructions.

As shown in Figure 7, the present embodiment incorporating the invention includes a memory management unit 104 which is coupled to external memory units via a 24 bit address bus 114 and a bi-directional 16 bit data bus 116. Additionally, the memory management unit 104 is coupled to program storage memory (not shown) via a 24 bit address bus 118 and a 32 bit bi-directional data bus 120. The memory management unit 104 is also coupled to the I Unit 106 of the machine processor core 102 via a 32 bit program read bus (PB) 122. The P Unit 108, A Unit 110 and D Unit 112 are coupled to the memory management unit 104 via data read and data write busses and corresponding address busses. The P Unit 108 is further coupled to a program address bus 128.

More particularly, the P Unit 108 is coupled to the memory management unit 104 by a 24 bit program address bus 128, the two 16 bit data write busses (EB, FB) 130, 132, and the two 16 bit data read busses (CB, DB) 134, 136. The A Unit 110 is coupled to the memory management unit 104 via two 24 bit data write address busses (EAB, FAB) 160, 162, the two 16 bit data write busses (EB, FB) 130, 132, the three data read address busses (BAB, CAB, DAB) 164, 166, 168 and the two 16 bit data read busses (CB, DB) 134, 136. The D Unit 112 is coupled to the memory management unit 104 via the two data write busses (EB, FB) 130, 132 and three data read busses (BB, CB, DB) 144, 134, 136.

Figure 7 represents the passing of instructions from the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

An embodiment of the invention is described in the following with particular reference to a multiply and accumulate unit (MAC) which provides a 17 x 17 multiplier-accumulator with accumulation on 40 bits.

Figure 8 is a schematic overview of an embodiment of a MAC 300, corresponding to the MACs 42 and 44. Figure 8 shows that the MAC provides a network of cascaded sub-blocks:

A partial product generation stage 324, which includes fractional mode control, receives first and second 17 bit operands 320 and 322 for generating partial products.

The output of the partial products generation stage passes to a partial product summing tree 328, where rounding and partial multiplication saturation control are applied.

A final adder stage 332 receives the 34 bit output of the partial product summing tree 328 and also a 40 bit Accumulator bus input (Ain). The final adder stage 332 includes zero and overflow flags detection, the flags being output at 334.

Finally a saturation stage 336 provides saturation to "0x007fffffff" or "0x7fffffffff" or "0xff8000000" or "0x8000000000" and outputs a 40 bit result and provides 16 LSBs cleared for rounding.

Control inputs 326 control the detailed operation of the MAC and control flags 334 are output by the decode unit.

Functions which can be realized by the MAC 300 can be summarized by the following equations:

$$\text{MUL[R]} \qquad Yin*Xin\ [+2^{15}],$$

$$\text{MAC[R]} \qquad Ain + Yin*Xin\ [+\ 2^{15}],$$

$$\text{MAS[R]} \qquad Ain - Yin*Xin\ [+\ 2^{15}].$$

In order to provide high speed, the partial product generation stage uses Booth encoding and the partial product reduction stages are implemented as a Wallace Tree structure. These techniques are described in "A suggestion for a fast multiplier" by CS Wallace, IEEE Transactions on Electronic Computers, 1964 and "A signed Binary Multiplication Technique", by Andrew D Booth, Quarterly Journal of mechanics and Applied Mathematics, Vol IV, part 2, 1951. More precisely, Radix-4 Booth encoding with a Wallace 4:2 based compressors reduction network is employed in the MAC 300.

Figure 9 shows the MAC 300 in more detail.

The partial product generation stage 324 receives the X input 322 at fractional mode stage 323, and the Y input at Booth encoder stages 321. Also supplied as one input for the Booth stages is an Add/Subtract control signal (Add/sub). The partial products are then generated in a plurality of Booth select stages 325.

The partial products are supplied to the partial product summing stage 328, which comprises a number of 3: 2 Wallace tree compressor stages 327 and 4:2 Wallace tree compressor stages 331. Signals including Yin, Xin, and SMUL (saturation multiply) (or GSM) signals are supplied to a decoder 329, which applies a control signal to a compressor stage 327. A rounding (RND) control signal is also supplied to a compressor stage 327.

The final adder stage 332 includes a 4:2 compressor stage 333 and the final adder itself 335. The compressor stage 333 receives the output of the last compressor stage 331. The 40 bit accumulator bus (Ain) is also effectively supplied to the adder 332, as are multiply/accumulate (Mpy/Acc) control signals. Zero and Overflow flags are output at 334 from the final adder 335.

The final saturation stage 336 provides for 32/40 bits saturation and lowest significant bit clearing for rounding mode control. Saturation and rounding control signals (SAT, RND, RDM and OVF40) are supplied to the final saturation stage for rounding control). The 40 bit result Aout is output at 338.

The various stages of the MAC shown in Figure 9 will be described in more detail in the following.

The Booth encoder stages 321 are implemented as a classical Booth encoder for dividing the number of partial products to be added. A Radix-4 encoder implements a modified Booth algorithm with 3 bits of a multiplier operand being converted to control zero Partial Product (PP) generation, multiplicand operand PP generation, multiplicand shifted by one position to the MSBs, PP generation and sign generation. Figure 10 is a table representing the Booth encoder, where p2, p1 and sg are outputs.

The Booth encoder basic equations should be packaged in one so-called leaf cell within the encoder. Output buffering can be left out of this cell. Nine cells like this are required to encode the 17 bits of the multiplier operand. Bits are associated in the manner indicated below:

| | |
|---|---|
| '0', Y0, Y1 | first encoder, |
| Y1, Y2, Y3 | second encoder, |
| Y3, Y4, Y5 | third encoder, |
| ...., | |
| Y13, Y14, Y15 | eighth encoder. |
| Y15, Y16 | ninth encoder. |

The first encoder cell is slightly different as the "000" input configuration will generate p1 = p2 = 0 and sg = 1 in order to handle saturate multiply (SMUL) mode more easily. The ninth and last encoder is also different because the last bit is a duplication of the sign bit, which simplifies its logic structure. The Add/sub signal that defines addition or subtraction of the product to the accumulator has the effect, if "multiply-and-subtract" mode is selected, of complementing the sign bit "sg" value (in the entries in the table of Figure 10) by an XOR (exclusive OR) gate. Figure 11 shows a gate level implementation of encoder stages, with Figure 11A being the standard encoder (including the add/subtract (A/S function), Figure 11B being the first encoder and Figure 11 C the modified encoder stage for last (i.e. the ninth) stage. The gate level implementations used in this specification have been drawn using conventional gate symbols and are therefore readily understandable to one skilled in the art without a detailed explanation thereof. Accordingly, a full description of the gate level implementations is not included in this specification. However, and merely by way of identifying the various gate symbols, reference is made to Figure 11A, where symbol 340 represents a NOT gate, symbol 342 represents an AND gate, symbol 344 represents an OR gate, symbol 346 represents a NAND gate and symbol 348 represents a XOR gate. Although not shown in Figure 11A, a NOR gate is represented later (in Figure 17) by a symbol 350, which is formed by the symbol 344 for an OR gate with a small circle at the output end.

It is in the partial product selection stages 325 that the partial products that will be further added together are generated. The stage consist of a multiplexor controlled by the signals "p2", "p1 " and "sg" previously described. Figure 12 is a Table describing a leaf cell that generates one bit of the partial product (PP).

"-2*X" and "-X" selections are built by inverting a corresponding X bit position and adding a Booth carry bit at position 0. The Booth carry bit is the "sg" bit value. A dedicated cell provides sign extension management. The first partial product also includes fractional mode control, as will be described later.

The partial products are aligned so that each is summed with the next shifted by 2 bit positions to the most significant bits. Figure 13 shows the logic of the leaf cells. Figure 13A represents a normal stage. Figure 13B represents a normal stage with sign extension. Figure 13C represents a final stage, and Figure 13D a final stage with sign extension. It will be noted that the final stages are simpler than the normal stages.

The reduction of partial products using a Wallace tree leads to the most parallel and irregular network of compressors. In order still to keep some regularity in the implementation. a mixed scheme of 3:2 and 4:2 compressors is used. A compressor is an operator that adds together n partial product bits delivering a sum and a carry bit. A 3:2 compressor sums 3 bits and delivers the two bits which are further reduced in the tree. A 4:2 compressor adds 4 bits together with a carry input and generates two bits and a carry output to its neighbor. The total number of reduction stages is three. The first one consist of, at worst, three slices of 3:2 compressors 317 that will generate three (sum, carry) pairs per partial product bit. These pairs are further reduced by two cascaded stages of 4:2 compressors 321, finally delivering a (sum, carry) pair per partial product bit to be added in the accumulator 323.

Figure 14 shows the partial products alignment and reduction using the first stage of compressors 327. Sign extension overhead in number of compressors is limited via addition of ones. Booth carries are also added in this stage (b0 to b8 signals). Rounding is performed by adding a one at bit position 15 when "RND" signal is active.

Then, intermediate sum (s 1) and carry (c1) bits are added together, in all bit positions, with a stage of 4:2 compressors 321. It is followed by another stage of the same type and a stage of half adders to reduce the PPs to a vector of sum and carry bits that will be added by the final adder. Figure 14 shows the reduction process applied to sum and carry bits issued by the network. Generally, the usage of 4:2 compressors leads to a more balanced signal arrival profile in general and at the end of the tree.

Figure 15 is a logic diagram of a cell for a 4:2 Wallace compressor stage. This cell provides a 4:2 counter with a faster path from an input 'Pi' to an output 'Sum' and balanced paths from an input 'Cin' and an output 'Cout' and the input 'Pi' to the output 'Co'. The connection of the 4:2 compressor in the partial product reduction stage is in both horizontal (C0 - C1) and vertical directions (Sum, Cout - Pi).

For 3:2 compressors, a cell performs an "a + b + 1" function for equations "sum = !(a XOR b)" and "carry = a | b". This is represented by means of the following truth table:

TABLE 1

| A | B | a + b + 1 | |
|---|---|---|---|
| | | sum | carry |
| 0 | 0 | 1 | 0 |
| 0 | 1 | 0 | 1 |
| 1 | 0 | 0 | 1 |
| 1 | 1 | 1 | 1 |

A particular application of the present embodiment is in digital telecommunications devices such as GSM devices. GSM requires the saturation and fractional mode control. In this embodiment, this is achieved by shifting the Xin operand by one position towards the most significant bit. This is implemented via a 2-input multiplexor as illustrated in Figure 16. The SMUL saturation mode implies that if "x1800" multiplied by "x1800" appears, the result must be forced to "007fffffff" or "0080007fff" where a rounding mode is selected. Decoding of the Xin and Yin special operands is performed through standard logic gates as illustrated in Figure 17. (As mentioned above with reference to Figure 11A, symbol 350 represents a NOR gate). The result complements the Booth carry of the first stage in order to add all ones for the first partial product. The total decode time is not longer than the delay through the Booth encoding and partial product selection stages.

The final adder stage includes addition of the accumulator content and sums and carries reduction. These operations are performed through a stage of 3:2 compressors in order to reduce the accumulator in (Ain), sum and carry busses to a new set of sums and carries, and an 40 bit adder to get the final result which is analyzed for 32 bits saturation detection.

High speed architectures of the final adder typically requires Carry Look Ahead (CLA) techniques in various implementations. A one block CLA for 40 bits leads to a carry propagation scheme of a 64 bit adder, as regards both speed and area. Another technique based on the observation of the partial product reduction tree delay profile, allows pure CLA implementation to be limited to lower bits up to the bit position where this delay starts to decrease. For the remaining most significant bits, the carry propagation effect is reduced by choosing a carry select adder scheme where the selection is performed by the carry output of the first CLA adder. Within the carry select architecture, a delay arrival profile can be taken into account by propagating the carry with a variable carry skip. This has the advantage of reducing toggling on the higher bits of the adder while getting a smaller CLA structure.

Figure 18 depicts the delay arrival profile for the partial product reduction, in terms of elementary full adder delays, and the corresponding final adder structure.

Zero detection signals are generated as described later with reference to Figures 19 - 26. Before describing zero detection, however, it is appropriate to note that a 3:2 compressor network is used to add the accumulator bus onto the extension bits, before being passed to the final adder. Sign extension is handled using the addition of ones from bit position 35 to bit position 39. The accumulator bus input value Ain[39:0] is forced to 0 if a multiply mode only is selected. So, where Ai = Ain[i].Mpy/MAC, Ai is either Ain[i] if Mpy/Mac is at logic level one or 0, otherwise.

With regard to zero detection, it is noted that when the final result, at the adder output, is zero the corresponding flag (zero detector) is set to one. If rounding mode is active, the 16 least significant bits of the result are assumed to be zero for updating the flag. As such, conventional implementations that scan the final result bits (after rounding) lead to a unacceptable increase of the total MAC critical path. In a particular embodiment of the invention, a zero anticipation mechanism, or "Zero Result Anticipation" (ZRA) mechanism, is used to update the flag in parallel with the final addition.

The zero result anticipation behavior relies on an early analysis of P, G and Z bits, at each bit position. Combinations of these bits lead to a "state machine"-like description in which states of the system are PS (Propagate State), GS (Generate State) and ZS (Zero State).

In the following, a zero detection mechanism based on a Carry Look-Ahead (CLA) adder-like structure will be described. However, before describing an implementation of the zero detection mechanism, there follows a description of the following mathematical algorithms on which the CLA architecture of the embodiment is based:

Where a and b are two operands of an addition, then:

$$g(i) = a(i) \bullet b(i) \qquad (1)$$

$$p(i) = a(i) \oplus b(i) \qquad (2)$$

In equations (1) and (2) above, "g" is a "generate term and "p" is a "propagate term. The symbol "•" represents a logical AND operation and the symbol "⊕" represents a logical Exclusive OR (XOR) operation. The "g" and "p" terms are combined to compute a carry. Indeed, c(i) = G(i) = G(i,0), if the carry in = 0, where:

$$(G(i,0), P(i,0)) = (g(0), p(0)), \text{ if } i = 0 \qquad (3)$$

$$(G(i,0), P(i,0)) = (g(i)\ p(i))\ o\ (G(i-1,0), P(i-1,0))$$

otherwise,
and where the operator o is:

$$(g_1, p_1)\ o\ (g_r, p_r) = (g_1 + (p_1 \bullet g_r), p_1 \bullet p_r) \qquad (4)$$

In the above equation, the symbol "+" represents a logic OR operation.

It can be proven that the commutativity of the "o" operator leads to:

$$(G(n,m), P(n,m)) = (G(n,k+1), P(n,k+1))\ o\ (G(k,m), P(k,m))\ (n > k \geq m) \qquad (5)$$

and

$$(G(n,m), P(n,m)) = (G(n-m,0), P(n-m,0))\ (n \geq m)$$

The same architecture can be used for several slices of operands, with the result of these calculations being combined to provide global carry generation, based on the 'o' operator. A slice of an operand comprises a range of bits of the operand. The degree of freedom provided by the index k in the above equation is used to slice the operand in the most efficient way, in terms of propagation delay. This is done by minimizing the global propagation time through the fast carry generator.

In order to illustrate zero detection, consider a simple example of two bit addition:

| | | | |
|---|---|---|---|
| a | 00 | 01 | 10 |

(continued)

| | | | |
|---|---|---|---|
| b | 00 | 11 | 10 |
| p | 00 | 10 | 00 |
| g | 00 | 01 | 10 |

It should be noted that the terms a and b may be exchanged. In order to generalize this to n-bit addition, a new zero term (equation 8 below) is defined and can be combined with equations (1) and (2) above to form a set of three equations (6), (7) and (8) for defining a p(i) bit, a g(i) bit and zero(i) bit, respectively:

$$g(i) = a(i) \bullet b(i) \quad (6)$$

$$p(i) = a(i) \oplus b(i) \quad (7)$$

$$zero(i) = \sim (a(i) + b(i)) \quad (8)$$

The representation "~ (a(i) + b(i))" indicates the complement of "(a(i) + b(i))"

A combination of the definitions of the three bits as defined in equations as set out at (6), (7) and (8) above leads to a state machine definition 400 of a zero anticipation mechanism as illustrated in Figure 19, in which the states of the system are:

ZERO(i,0) = State zero (402)
G(i,0) = State generate (404)
P(i,0) = State propagate (406).

Equations for defining the states ZERO(i,0), G(i,0) and P(i,0) are:

$$ZERO(i,0) = zero(i)\ ZERO(i\text{-}1,0) \quad (9)$$

$$G(i,0) = g(i)\ ZERO(i\text{-}1,0) \quad (10)$$

$$P(i,0) = p(i)(G(i\text{-}1,0) + P(i\text{-}1,0)). \quad (11)$$

Thus, a zero (Z) is detected on bit i, if one of these three states is found.

$$Z(i,0) = ZERO(i,0) + G(i,0) + P(i,0) \quad (12)$$

In other words, this means that the addition of two operands results in a zero if a state is produced such that an index k ($0 \le k \le n$) is found so that:

$$p(n\text{-}1) \ldots p(k\text{-}1)\ g(k)\ zero(k\text{-}1) \ldots zero(0) \qquad \text{if } (0 \le k \le n) \quad (13)$$

To provide zero detection using the fast carry generation architecture described above, an operator is defined with the same properties as the operator "o". This can be derived from the equation (13) above. Indeed, two operand slices (n,k+1) and (k,m) each result in a zero if they have the property described in equation (13) above. A zero will be detected on a slice (n, m) in the two following cases:

the state of the (k,m) slice is all zeros (A)

the state of (n,k+1) is a zero_detect (i.e. the same as one of the states at (12)) (B)
or
the state of (k,m) is a zero_detect and the slice contains a "g" (C)
the state of (n,k+1) is all p's (D)

This leads to the following equation:

$$Z(n,m) = ((\underbrace{Z(k,m)}_{(A)} \text{ and } \underbrace{\sim G(k,m) \text{ and } Z(n,k+1)}_{(B)}) \text{ or } (\underbrace{Z(k,m) \text{ and } G(k,m)}_{(C)} \text{ and } \underbrace{P(n,k+1)}_{(D)})) \qquad (14)$$

where Z(i,i) = g(i) + zero(i)

Also, the G(i,j) and P(i,j) terms can be taken from the adder fast-carry generation intermediate results. Thus, the zero-detection mechanism achieved by modifying the "o" operator in the following way to form a "u" operator which is defined as

$$(g_1, p_1, z_1) \; u \; (g_r, p_r, z_r) =$$

$$(g_1 + (p_1 \bullet g_r), p_1 \bullet p_r, (z_1 \bullet z_r \bullet (\sim g_r)) + p_1 \bullet z_r \bullet g_r)$$

Using these equations, cells can be created that are optimized both for layout implementation and performance. These cells are optimized for CMOS technology which invert signals.

Figure 20A is a schematic representation of an approach to implementing a zero anticipation mechanism in the form of time optimal adder comprising a binary tree of nodes N based on the principles set down in the above equations. The arrows A joining the nodes represent the propagation of intermediate zero signals. Figure 20A illustrates this structure for 8 bit positions B0 - B7. However, it will be apparent from Figure 20A how this can be extended to any number of bit positions.

Figure 20B is a specific exemplary implementation for such a time optimal adder for 5 bits (e.g. bits B0 - B4 of Figure 20A). This includes an array of cells C(i,j), with cells CC, implementing the operator "u" for combining intermediate anticipation signal, and cells CB for forwarding intermediate anticipation signals between the cells CC. In parentheses are slice boundaries (i,j). A slice boundary is the boundary between slices. Each column in Figure 20B represents a bit position with the bit positions increasing from a lowest significant bit position on the right to successively higher bit positions towards the left.

As illustrated in Figure 20B, the array for a 5-bit operation is sliced into a first sub-array 408 for a 2-bit operation and a second sub-array 410 for a 3-bit operation, and that the global result is obtained by combining the two intermediate results via the "u" operator (e.g. (4,4) u (3,2) = (4,2)).

Inputs for bits B0 - B4 are supplied to cells of the first row 412. The intermediate anticipation signals ripple upwards through the second row 413 and the third row 414 and towards the left as indicated by the arrows. The signals pass from one row to the next with a delay corresponding to the time taken for the combining of the intermediate results, but pass horizontally without delay. The intermediate anticipation result from the first 2-bit operation 408 is generated at the cell 415 and is supplied to the third row 414 of cells of the three bit operation to form the global result at a vertical output from the cell 416.

The principles employed correspond to those employed in the binary tree of Figure 20A. The first row 412 in Figure 20B corresponds to row R1 in Figure 20A. The cells CC of Figure 20B effectively correspond to the nodes N of Figure 20A. It will be noted that the distribution of the cells CC in the columns for bits B2, B3 and B4 and the rows 413 and 414 of Figure 20B differs from that of the nodes N in the columns for bits B2, B3 and B4 and the rows R2 and R3 of Figure 20A. This is due to the slicing of the 5-bit adder array of Figure 20B into the 2 bit and 3 bit sub-arrays 408 and 410. Although an implementation of a 5-bit adder is depicted in Figure 20B, using the principles set out above and the illustrations in Figures 20A and 20B, it will be apparent how this can be extended to provide a time optimal adder for a zero anticipation mechanism for any desired number of bits.

It can be shown that the carry_in does not affect the carry generation architecture described above, and can be taken into account at the very end of the calculation. This can be demonstrated by recurrence in the CLA adder:

1) the carry_out from the first 1-bit slice is: c(0) = G(0,0) + P(0,0)•carry_in.
2) Assuming that i exists, such that c(i) = G(i,0) + P(i,0)•carry_in.

$$c(i+1) = g(i+1) + p(i+1)\bullet c(i)$$

$$= g(i+1) + p(i+1)\bullet(G(i,0) + P(i,0)\bullet carry_in)$$

$$= g(i+1) + p(i+1)\bullet G(i,0) + p(i+1)\bullet P(i,0)\bullet carry_in$$

$$= (g(i+1) + ,0)\ p(i+1)\bullet G(i,0)) + (p(i+1)\bullet P(i,0))\bullet carry_in$$

$$= G(i+1,0) + P(i+1,0)\bullet carry_in$$

Thus, the impact of the carry_in on the final result can be computed after the fast_carry generation scheme. This property is also true for zero detection. Indeed if carry_in = 0, then a zero is detected -if the property in equation (13) is verified, and if carry_in = 1, a zero is detected if the n-bit state is all p's.

This results in the equation:

$$zero_detect = \sim carry_in\bullet Z(n-1,0) + carry_in.P(n-1,0).$$

The final result of the zero detection can be supplied to enable anticipation of a zero result and to provide early indication of the result of, for example, condition codes evaluation.

Figure 21 illustrates the inputs and outputs for one of the cells CC(i,j) 420 which are shown as a closed box in the Figure 20. This type of cell implements the "u" operation, and, in the general case, has the following inputs and outputs, both vertically and horizontally:

| | |
|---|---|
| Vertical input (422): | p_r, g_r, z_r |
| Horizontal input (424): | p_1, g_1, z_1 |
| Horizontal output (426): | p_1, g_1, z_1 |
| Vertical output (428): | P, G, Z = (p_r, g_r, z_r) u (p_1, g_1, z_1) |

It can be seen that a horizontal input 424 (if present) is simply passed to the horizontal output 426. This is performed without modification and without delay, so that the output signal is available substantially at the time the input signal is available. It can also be seen that the vertical output 428 is a combination, as defined by the operator "u" of the vertical input 422 and the horizontal input 424. This process does take a certain time, so that the vertical output 428 is available shortly after the vertical and horizontal inputs 422, 424 are available. The individual cells need. not have a full set of inputs and outputs depending upon its position in the array, as shown in Figure 20.

Figure 22 illustrates the inputs and outputs for one of the cells CB(i,j) 430 which are shown as an open box in Figure 20. This type of cell simply forwards signals from inputs to outputs of the cells, as illustrated below:

| | |
|---|---|
| Vertical input (432): | p_r, g_r, z_r |
| Horizontal output (436): | p_1, g_1, z_1 = p_r, g_r, z_r |
| Vertical output(438): | p_r, g_r, z_r |

The horizontal output signals (p_1, g_1, z_1) at 436 are copies of the vertical input signals (p_r, g_r, z_r) from 432, which have been "amplified" by a buffer. The vertical output signals (p_r, g_r, z_r) at 438 are the vertical input signals (p_r, g_r, z_r) from 432, which have been "amplified" by a buffer. A vertical input 432, if present, is passed to the horizontal and vertical outputs, 436 and 438 although the output is delayed with respect to the input by an amount corresponding to the delay involved in generating a combination signal in one of the combining cells CC 420. It will be noted that the individual cells CB 430 have vertical inputs and horizontal and/or vertical outputs depending upon the position in the array, as shown in Figure 20.

The delay in the vertical direction provided by the buffer cells is needed in order that propagation of the signals in the upward direction in Figure 20B runs in parallel in each column. The horizontal propagation is effectively immediate, so that a result is available at the vertical output (where provided) of the last cell in the vertical direction (i.e. the topmost cell as shown in Figure 20B) for each bit position.

As described above, the example shown in Figure 20B is effectively split into two sub-arrays, with intermediate anticipation signals propagating to the left and upwardly via the various cells in each sub-array, with the output of the first sub-array being combined with the output of the second cell in the third row (i.e. the topmost row of cells).

The intermediate anticipation signals of the operation of the five bit example of Figure 20B operation are shown in the following Table 2.

TABLE 2

| A | 1 | 1 | 0 | 0 | 1 |
|---|---|---|---|---|---|
| B | 0 | 0 | 1 | 1 | 1 |
| p_in<br>g_in<br>z_in | 1<br>0<br>0 | 1<br>0<br>0 | 1<br>0<br>0 | 1<br>0<br>0 | 0<br>1<br>1 |
| stage 1 | P (4,4) = 1<br>G (4,4) = 0<br>Z (4,4) = 0 | P (3,2) = 1<br>G (3,2) = 0<br>Z (3,2) = 0 | P (2,2) = 1<br>G (2,2) = 0<br>Z (2,2) = 0 | P (1,0) = 0<br>G (1,0) = 1<br>Z (1,0) = 1 | P (0,0) = 0<br>G (0,0) = 1<br>Z (0,0) = 1 |
| stage 2 | P (4,2) = 1<br>G (4,2) = 0<br>Z (4,2) = 0 | P (3,2) = 1<br>G (3,2) = 0<br>Z (3,2) = 0 | P (2,2) = 1<br>G (2,2) = 0<br>Z (2,2) = 0 | P (1,0) = 0<br>G (1,0) = 1<br>Z (1,0) = 1 | P (0,0) = 0<br>G (0,0) = 1<br>Z (0,0) = 1 |
| stage 3 | P (4,0) = 0<br>G (4,0) = 1<br>Z (4,0) = 1 | P (3,0) = 0<br>G (3,0) = 1<br>Z (3,0) = 1 | P (2,0) = 0<br>G (2,0) = 1<br>Z (2,0) = 1 | P (1,0) = 0<br>G (1,0) = 1<br>Z (1,0) = 1 | P (0,0) = 0<br>G (0,0) = 1<br>Z (0,0) = 1 |
| sum | 0 | 0 | 0 | 0 | 0 |
| zero | 1 | 1 | 1 | 1 | 1 |

As, in many applications, the intermediate zero anticipation detection results, which are available for the various bit positions in the top row of cells, are not needed. In such cases, the top left cell alone (in Figure 20, cell CC (4,0)) can be kept as an "u" operator, with one or more of the remaining cells in that row (where the intermediate results are not needed) being replaced by "o" operators, so as to avoid unnecessary logic and improve overall performance. However, "u" operator cells can also be provided at specific bit positions where intermediate zero anticipation results are needed for intermediate bit positions in an embodiment.

Figure 23 is a schematic block diagram of an example of circuitry 450 including logic gates for implementing the "u" operator in one of the "CC" cells 420 of Figure 21. In this diagram, the inputs 422 and 424 shown in Figure 21 are provided at the left side of the Figure, and the outputs 426 and 428 are shown at the right hand side. As can be seen in Figure 23, the circuitry for the operator includes one NOT gate 452, four AND gates 454 and two OR gates 456. It can be seen that the gates implement the operator "u". It will, however, be appreciated that other gate structures could be used to implement the operator "u" in other embodiments.

Figure 24 is a schematic block diagram of an example of circuitry 460 for implementing one of the buffer cells CB of Figure 22. In this diagram, the vertical inputs 432 shown in Figure 24 are provided at the left hand side of the Figure and the horizontal and vertical outputs 436 and 438 are shown at the right hand side. As can be seen in Figure 24, the circuitry includes three buffer (delay) circuits 434, one for each of the g_r, p_r and z_r inputs 432. The delay factor of the buffer circuits is selected to match the delay imposed by the circuitry for performing the "u" operation. The outputs from the buffer circuits 434 are supplied to the horizontal and/or vertical outputs 436 and 438, depending on the position of the buffer cell CB in the array illustrated in Figure 20.

Figure 25 is a schematic block diagram of an example application of the zero look-ahead mechanism of Figures 20A/20B to a forty-bit final adder stage 470 of a multiply and accumulate unit. such as the MACs 1 and 2 (42,44) shown in Figure 3. In this example, zero anticipation is required at forty bits and also at sixteen bits. In Figure 25, a first zero anticipation stage 472, provides a zero anticipation output based on 16 bits B0-B15 supplied to it. These sixteen bits B0-B15 for which signals are supplied correspond to the sixteen lowest order bits of the arithmetic unit result. The arithmetic result bits are also supplied to the saturation stage 476 of the MAC. The zero anticipation result signal 473 on 16 bits is output at 477. It is also supplied to a logical AND gate 478 where the signal is added to a partial zero anticipation result signal 475 from a second zero anticipation stage 474. The second zero anticipation stage 474, provides a zero anticipation output based on signals for 24 bits supplied to it. The twenty four bits for which signals are supplied correspond to the twenty four highest order bits B16-B39 of the forty bit arithmetic unit result. The arithmetic result bits B16-B39 are also supplied to the final adder stage 335 of the MAC, the output of the final adder stage comprising the product Pr.

By combining the 16 bit zero anticipation result signal with the 24 bit zero anticipation result signal in the AND gate 478, a global zero anticipation result signal 479 on 40 bits can be generated at the output of the AND gate 478.

Figure 26 illustrates in more detail the connection of the zero anticipation mechanism of Figure 25 in a MAC (e.g. the MAC 42 or the MAC 44 of Figure 3). The outputs from a partial product reduction tree 480 of the MAC is supplied to the forty bit final adder and zero anticipation mechanism 470. The outputs of the final adder and zero anticipation mechanism comprise the global zero anticipation flag 479 for the final result on forty bits, the result of the final adder 482 and the 16th bit zero anticipation flag 477. The results from the final adder 482 and the 16th bit zero anticipation flag 477 are supplied to the saturation stage 476 of the MAC, from which the output 483 is supplied to an accumulator register.

In the final 32/40 bit saturation stage, overflow for extension bits (Add[39:32]) is detected and the final result is forced to a maximum of 32 bits representation ("0x7ffffff" or "0x80000000"), or 40 bits representation ("0x7fffffffff" or "0x8000000000"), if the saturation mode is on. Actual clearing of 16 least significant bits is also performed if the rounding mode is active.

Figure 27 illustrates an example of 32 bit saturation detection logic of the decoding section that generates the overflow bit OVF and also a saturation bit SATC which is a function of a saturation control signal SAT, causing a saturation mode and the presence of the overflow bit OVF.

Overflow for extension bits is defined by the fact that Add[39:31] is either different from "0x1ff" or "0x000". The clamp value is then chosen based on the sign (Add[39]). If the RND signal is at one, Add[15:0] is set to "0x0000", in all cases. A cell is provided to generate the different values. There are two basic versions of this cell, one for bit positions lower than bit 15 and one for bit positions higher than bit 16. A special cell is provided for bits 16 to enable an unbiased rounding mode. If an unbiased rounding mode were not provided, the cell for bit 16 could be of the same type as for bit positions higher than 16. The various cell, which are described below, effectively define a multiplexor for selecting signals for the final accumulator.

Figures 28A illustrates an example of a saturation control cell (multiplexor cell) suitable for each of bits X39 to X17. In this Figure, the signal $ADD_i$ is the bit to be added for the bit position i. The signal SG is bit is the sign bit represented by the $ADD_i$ bit for position 39 (i.e. $ADD_{39}$). The signal SATC is the saturation bit generated by the saturation detection logic of Figure 27. The signal Fi is set to one or zero depending on the cell position.

Figure 28B illustrates an example of a saturation control cell (multiplexor cell) suitable for each of bits 15 to 0. Here the signal RND is a rounding signal. When this is active, rounding is effected on bits 15:0.

Figure 28C illustrates an example of a saturation control cell (multiplexor cell) suitable for bit position 16. Here the signal UR is an unbiased rounding signal. This is generated when the zero anticipation signal Z16 477, from Figure 25 is active, representative of a zero having been detected for bits 15:0 (i.e. the first 16 bits) and a signal URM is active indicative of an unbiased rounding mode being active. The effect of this signal UR is to invalidate the Addi part of the multiplexor because saturation takes precedence over unbiased rounding. Thus a rounded result which overflows, e. g., for 32 bits, is represented as 7fff0000 and not 7ffe0000, and bit position 16 (i.e. the 17th bit) of the final adder is set to zero. The operation of the saturation control cell of Figure 28C will now be described in more detail.

When the unbiased rounding mode is selected (URM is asserted) and bits X15 to X0 are all zero (the Z 16 bit is asserted), the output of an AND gate 362 forming the signal UR is high. The UR signal is inverted by the NOT gate 364 to generate the signal NUR, which in this case is low. The effect of the low signal is to dominate the AND gate 366, whereby the output of the OR gate 372 is zero, which has the effect of forcing bit X16 to zero.

When either the unbiased rounding mode is not selected (URM is not asserted) or bits X15 to X0 are not all zero (the Z16 bit is not asserted), the output of the AND gate 362 forming the signal UR will be low. The inverted UR signal from the NOT gate 364, i.e. the NUR signal, is then high, whereby, the NUR signal does not dominate the AND gate 366. As a result, the setting of bit X16 is controlled according to the saturation mode in the same manner as for bits X39 to X17. It will be appreciated that without the signal NUR, and the circuitry for generating that signal, the cell for bit position X16 corresponds to that for bit positions X39 to X17.

The presence of the special saturation cell of Figure 28C, in combination with the zero anticipation circuitry as described above to force the 17th bit (bit position 16) to zero, can be used to effect unbiased rounding in an efficient manner.

Accordingly, there now follows an explanation of the effect of unbiased rounding. This differs from the previous rounding only in one case as illustrated in Figure 29A namely where a calculation result is exactly P.5, where P.5 is a value half way between P and P+1, where P is a value expressed to a predetermined accuracy. In the particular example, P is a binary value the 16 lowest significant bits zero.

In an embodiment of the invention, where unbiased rounding is selected and a zero is detected on the 16 lowest significant bits of a calculation result, the 17th bit (X16) is forced to 0. This results in unbiased rounding in that, in the final 32 bits adder, addition of 1 at bit position 15 will already have occurred and the 16 lowest significant bits have a 0 value. Figures 29B and 29C illustrate the two alternative states for X16 and the result that whatever its state at this time is, it is forced to 0, if zero detection has occurred.

The determination of whether the bits X15 - X0 are zero is effected using the zero result anticipation approach mentioned with reference to Figures 19 to 26.

In particular, zero anticipation is performed on a propagation tree of a carry lookahead structure. This uses the carry and sum generated from the partial product reduction tree 314. From the carry and sum, a zero result for the bit X16 is anticipated by mapping the propagation tree onto the one-zero result of the first 16 bits. This provides a propagation speed at least as fast as the carry propagation on the final adder. From the zero result, we can predict whether bit X16 of the MAC structure has to be forced to zero or not.

Figure 30 illustrates logic for detecting an overflow on 40 bits. A control bit ovf4O enables an overflow on 32 bits if it is off, or an overflow on 40 bits if it is on . This detection occurs in a final 8 bits adder. A 40 bit overflow will occur if S[39] is different from S[40]. S[40] is not calculated but can be deduced using the logic in Figure 30, and as follows:

S40 = $\underline{A39}$^A39^C39 = C39
S39 = $\underline{A39}$^A38^C38, where $\underline{A39}$ means the inverse of the A39 signal.

If S39 differs from S40, there is an overflow. Accordingly, the overflow

(OVF) is derived as follows:
OVF = S40^S39
OVF = C39^A39^A38^C38

OVF is directly derived with 2 XOR gates. The final result is forced to 0x7fffffffff or 0x8000000000 if the saturation signal (ovm) is on.

Figure 31 is a schematic representation of an integrated circuit 40 incorporating the invention. As shown, the integrated circuit includes a plurality of contacts 42 for surface mounting. However, the integrated circuit could include other configurations, for example a plurality of pins on a lower surface of the circuit for mounting in a zero insertion force socket, or indeed any other suitable configuration.

One application for a processing engine such as the processor 10, for example as incorporated in an integrated circuit as in Figure 31, is in a telecommunications device, for example a mobile wireless telecommunications device. Figure 32 illustrates one example of such a telecommunications device. In the specific example illustrated in Figure 32, the telecommunications device is a mobile telephone 11 with integrated user input device such as a keypad, or keyboard 12 and a display 14. The display could be implemented using appropriate technology, as, for example, a liquid crystal display or a TFT display. The processor 10 is connected to the keypad 12, where appropriate via a keyboard adapter (not shown), to the display 14, where appropriate via a display adapter (not shown), and to a telecommunications interface or transceiver 16, for example a wireless telecommunications interface including radio frequency (RF) circuitry. The radio frequency circuitry could be incorporated into, or separate from, an integrated circuit 40 comprising the processor 10. The RF circuitry 16 is connected to an aerial 18.

Thus, there has been described a particular exemplary embodiment of a mechanism and method for providing unbiased rounding. In the particular embodiment, unbiased rounding is effected by forcing bit 16 to a predetermined value, here logical zero, when bits 15-0 are anticipated as being zero. It will be appreciated that this is one specific example. More generally, the (N + 1)th bit could be forced to that logical value when bits N - 0 are anticipated as being zero. Also, this description has been given specifically with respect to a multiply and accumulate (MAC) unit of a processor. However, the invention is not limited thereto and finds general application to arithmetic units of processing engines. It can find application, by way of examples only, to a floating point unit where rounding is to be effected to a given number of significant places, to a floating point unit with sticky bit indication for realignment to enable addition of a mantissa and to fixed point units for overflow anticipation. Accordingly, the invention finds general application to application to arithmetic units. and the description is to be understood to be exemplary only, and not to be limiting.

Thus, it will be appreciated that although particular embodiments of the invention have been described, many modificatios may be made within the scope of the present invention as defined in the appended claims.

## Claims

1. An arithmetic unit for a processing engine, the arithmetic unit comprising:

   arithmetic logic for performing an arithmetic operation to generate an arithmetic result **characterised by** zero anticipation logic (472-figure 25) for anticipating a logical zero on N least significant bits of the result in response to input operands;
   rounding logic for forcing the N least significant bits of the result to zero and
   unbiased rounding logic (362, 366, 372-figure 28C) for forcing a predetermined logic value on the (N+1)th least significant bit of the result, the unbiased rounding circuitry being responsive to a zero anticipation output signal (477-figure 25) from the zero anticipation circuitry.

2. An arithmetic unit according to claim 1, wherein the predetermined logical value is logical zero.

3. An arithmetic unit according to claim 1 or claim 2, wherein the zero anticipation tree comprises a carry propagation tree responsive to carry results of the arithmetic logic for anticipating a zero on each of N least significant bits of an arithmetic result to generate the zero anticipation output signal, the unbiased rounding logic being responsive to the output signal for forcing the (N+1)th least significant bit of the result to logical zero where a logic zero is anticipated on N lowest significant bits of the result.

4. An arithmetic unit according to any preceding claim, wherein the unbiased rounding logic is selectively operable to provide unbiased rounding.

5. An arithmetic unit according to any preceding claim, wherein the unbiased rounding logic comprises a multiplexor responsive to an unbiased rounding select signal selectively to enable forcing of the (N+1)th bit to logical zero.

6. An arithmetic unit according to any preceding claim, wherein the arithmetic unit is a multiply and accumulate unit comprising a partial product reduction tree providing carry results, a final adder connected to the partial production reduction tree holding the result.

7. An arithmetic unit according to claim 6, wherein the multiply and accumulate unit provides X-by-Y bit multiplication with accumulation on M bits.

8. An arithmetic unit according to claim 7, wherein X=Y=17 and M=40.

9. An arithmetic unit according to any preceding claim, wherein N is 16.

10. An arithmetic unit according to any preceding claim, wherein said zero result anticipation logic generates a further output signal where all the bits of the result, or a predetermined number greater than N of least significant bits, are all logical zero.

11. An arithmetic unit according to any one of claims 1 to 10, wherein the arithmetic unit is a fixed point unit with overflow anticipation.

12. A processing engine comprising at least one arithmetic unit according to any preceding claim.

13. A processing engine according to claim 12 in the form of a digital signal processor.

14. An integrated circuit comprising a processing engine according to claim 12 or claim 13.

15. Telecommunications apparatus comprising a processing engine according to claiun 12 or 13.

16. Telecommunications apparatus according to claim 15, comprising a user input device, a display, a wireless telecommunications interface and an aerial.

17. A method for unbiased rounding in an arithmetic unit of a processing engine, the method comprising:

   performing an arithmetic operation (476-figure 25) to generate an arithmetic result;

**characterized by**

anticipating (472-figure 25) a logical zero on N least significant bits of the result in response to rounding the result by forcing the N least significant bits of the result to zero;
forcing a predetemined logical value on the (N+1)th least significant bit of the result where a logic zero (477-figure 25) is anticipated on N least significant bits of the result.

**18.** A method according to claim 17, wherein the predetermined logical value is logical zero.

**19.** A method according to claim 17 or claim 18, wherein zero anticipation is effected by performing carry propagation in a carry propagation tree in response to carry results of arithmetic logic and generating an output signal where a logical zero is anticipated on N least significant bits of the result.

**20.** A method according to claim 19, comprising selectively supplying an unbiased rounding select selectively to enable forcing of the (N+1)th bit to zero when a logical zero is anticipated for N lowest significant bits.

**21.** A method according to any one of the claims 17 to 20, wherein the arithmetic unit is a multiply and accumulate unit comprising a partial product reduction tree providing carry results, a final adder connected to the partial production reduction tree holding the result.

**22.** A method according to claim 21, wherein the multiply and accumulate unit provides X-by-Y bit multiplication with accumulation on M bits

**23.** A method according to claim 22, where X=Y=17 and M=40.

**24.** A method according to any one of claims 17 to 23, wherein N is 16.

**25.** A method according to any one of claims 17 to 24, additionally generating a zero anticipation result output where all the bits of the result, or a predetermined number greater than N of least significant bits, are all anticipated to be logical zero.

**26.** A method according to claim 18, wherein the step of performing an arithmetic operation comprises adding a value of $2^N$ into the arithmetic result when rounding is enabled.

**Patentansprüche**

**1.** Arithmetikeinheit für eine Verarbeitungsmaschine, wobei die Arithmetikeinheit umfaßt:

eine Arithmetiklogik, die eine Arithmetikoperation ausführt, um ein arithmetisches Ergebnis zu erzeugen,

**gekennzeichnet durch**

eine Nullantizipations-Logik (472 - Fig. 25), die in Reaktion auf Eingangsoperanden eine logische Null an N niedrigstwertigen Bits des Ergebnisses antizipiert;

eine Rundungslogik, die die N niedrigstwertigen Bits des Ergebnisses auf null zwingt; und

eine Logik (362, 366, 372 - Fig. 28C) für nicht vorbelastete Rundung, die dem (N + 1)-ten niedrigstwertigen Bit des Ergebnisses einen vorgegebenen logischen Wert aufzwingt, wobei die Schaltungsanordnung für nicht vorbelastete Rundung auf ein Nullantizipations-Ausgangssignal (477 - Fig. 25) von der Nullantizipations-Schaltungsanordnung anspricht.

**2.** Arithmetikeinheit nach Anspruch 1, bei der der vorgegebene logische Wert eine logische Null ist.

**3.** Arithmetikeinheit nach Anspruch 1 oder Anspruch 2, bei der der Nullantizipations-Baum einen Übertragausbreitungsbaum umfaßt, der auf Übertragergebnisse der Arithmetiklogik anspricht, um für jedes der N niedrigstwertigen Bits eines arithmetischen Ergebnisses eine Null zu antizipieren, um ein Nullantizipations-Ausgangssignal zu erzeugen, wobei die Logik für nicht vorbelastete Rundung auf das Ausgangssignal anspricht, um das (N + 1)-te niedrigstwertige Bit des Ergebnisses auf eine logische Null zu zwingen, wo an N niedrigstwertigen Bits des Ergebnisses eine logische Null antizipiert wird.

**4.** Arithmetikeinheit nach einem vorhergehenden Anspruch, bei der die Logik für nicht vorbelastete Rundung wahlweise betreibbar ist, um eine nicht vorbelastete Rundung zu schaffen.

**5.** Arithmetikeinheit nach einem vorhergehenden Anspruch, bei der die Logik für nicht vorbelastete Rundung einen Multiplexer umfaßt, der auf ein Auswahlsignal für nicht vorbelastete Rundung anspricht, um wahlweise zu ermöglichen, das (N + 1)-te Bit auf eine logische Null zu zwingen.

**6.** Arithmetikeinheit nach einem vorhergehenden Anspruch, wobei die Arithmetikeinheit eine Multiplikations- und Akkumulationseinheit ist, die einen Partialprodukt-Reduktionsbaum enthält, der Übertragsergebnisse bereitstellt, wobei mit dem Partialprodukt-Reduktionsbaum ein das Ergebnis haltender Endaddierer verbunden ist.

**7.** Arithmetikeinheit nach Anspruch 6, bei der die Multiplikations- und Akkumulationseinheit eine X-mal-Y-Bitmultiplikation mit Akkumulation an M Bits ausführt.

**8.** Arithmetikeinheit nach Anspruch 7, bei der X = Y = 17 und M = 40.

**9.** Arithmetikeinheit nach einem vorhergehenden Anspruch, bei der N gleich 16 ist.

**10.** Arithmetikeinheit nach einem vorhergehenden Anspruch, bei der die Nullergebnis-Antizipationslogik ein weiteres Ausgangssignal erzeugt, wo sämtliche Bits des Ergebnisses oder eine vorgegebene Anzahl größer als N von niedrigstwertigen Bits sämtlich logisch null sind.

**11.** Arithmetikeinheit nach einem der Ansprüche 1 bis 10, wobei die Arithmetikeinheit eine Festkommaeinheit mit Überlaufantizipation ist.

**12.** Verarbeitungsmaschine, die wenigstens eine Arithmetikeinheit nach einem vorhergehenden Anspruch umfaßt.

**13.** Verarbeitungsmaschine nach Anspruch 12 in Form eines digitalen Signalprozessors.

**14.** Integrierte Schaltung, die eine Verarbeitungsmaschine nach Anspruch 12 oder Anspruch 13 umfaßt.

**15.** Telekommunikationsvorrichtung, die eine Verarbeitungsmaschine nach Anspruch 12 oder 13 umfaßt.

**16.** Telekommunikationsvorrichtung nach Anspruch 15, die eine Anwendereingabevorrichtung, eine Anzeige, eine drahtlose Telekommunikationsschnittstelle und eine Antenne umfaßt.

**17.** Verfahren zur nicht vorbelasteten Rundung in einer Arithmetikeinheit einer Verarbeitungsmaschine, wobei das Verfahren umfaßt:

Ausführen einer Arithmetikoperation (476 - Fig. 25), um ein arithmetisches Ergebnis zu erzeugen;

**gekennzeichnet durch**

Antizipieren (472 - Fig. 25) einer logischen Null an N niedrigstwertigen Bits des Ergebnisses in Reaktion auf Eingangsoperanden;

Runden des Ergebnisses **durch** Zwingen der N niedrigstwertigen Bits des Ergebnisses auf null;

Zwingen des (N + 1)-ten niedrigstwertigen Bits des Ergebnisses auf einen vorgegebenen logischen Wert, wo eine logische Null (477 - Fig. 25) an N niedrigstwertigen Bits des Ergebnisses antizipiert wird.

**18.** Verfahren nach Anspruch 17, bei dem der vorgegebene logische Wert eine logische Null ist.

**19.** Verfahren nach Anspruch 17 oder Anspruch 18, bei dem die Nullantizipation durch Ausführen einer Übertragausbreitung in einem Übertrag-Ausbreitungsbaum in Reaktion auf Übertragergebnisse der Arithmetiklogik und durch Erzeugen eines Ausgangssignals, wo eine logische Null an N niedrigstwertigen Bits des Ergebnisses antizipiert wird, ausgeführt wird.

**20.** Verfahren nach Anspruch 19, das das wahlweise Liefern eines Auswahlsignals für eine nicht vorbelastete Rundung umfaßt, um zu ermöglichen, daß das (N + 1)-te Bit auf null gezwungen wird, wenn für N niedrigstwertige Bits eine logische Null antizipiert wird.

**21.** Verfahren nach einem der Ansprüche 17 bis 20, bei dem die Arithmetikeinheit eine Multiplikations- und Akkumulationseinheit ist, die einen Partialprodukt-Reduktionsbaum enthält, der Übertragergebnisse bereitstellt, wobei mit dem Partialprodukt-Reduktionsbaum ein das Ergebnis haltender Endaddierer verbunden ist.

**22.** Verfahren nach Anspruch 21, bei dem die Multiplikations- und Akkumulationseinheit eine X-mal-Y-Bitmultiplikation mit Akkumulation an M Bits ausführt.

**23.** Verfahren nach Anspruch 22, bei dem X = Y = 17 und M = 40.

**24.** Verfahren nach einem der Ansprüche 17 bis 23, bei dem N gleich 16 ist.

**25.** Verfahren nach einem der Ansprüche 17 bis 24, das zusätzlich einen Nullantizipationsergebnis-Ausgang erzeugt, wo für sämtliche Bits des Ergebnisses oder für eine vorgegebene Anzahl größer als N von niedrigstwertigen Bits sämtlich eine logische Null antizipiert wird.

**26.** Verfahren nach Anspruch 18, bei dem der Schritt des Ausführens einer Arithmetikoperation das Addieren eines Wertes aus $2^N$ zu dem arithmetischen Ergebnis umfaßt, wenn eine Rundung freigegeben ist.

**Revendications**

**1.** Unité arithmétique pour moteur de traitement, l'unité arithmétique comportant:

une logique arithmétique pour effectuer une opération arithmétique dans le but de générer un résultat arithmétique, **caractérisé par**:

une logique d'anticipation de zéros (472- figure 25) pour anticiper un zéro logique sur les N bits de poids le plus faible du résultat, en réaction à des opérandes d'entrée;
une logique d'arrondissement pour imposer aux N bits de poids le plus faible du résultat 1a valeur zéro en réaction à un signal d'arrondissement (Rnd-figure 28B); et
une logique d'arrondissement au plus près (362, 366, 372 - figure 28C) pour imposer une valeur logique prédéterminée au $(N+1)^{ème}$ bit de poids le plus faible du résultat, le circuit d'arrondissement au plus près réagissant à un signal de sortie d'anticipation de zéros (477 - figure 25) généré par le circuit d'anticipation de zéros, en réponse à un signal de mode d'arrondissement au plus près (URM - figure 28C).

**2.** Unité d'arithmétique selon la revendication 1, dans laquelle la valeur logique prédéterminée est un zéro logique.

**3.** Unité arithmétique selon la revendication 1 ou 2, dans laquelle l'arborescence d'anticipation des zéros comporte une arborescence de propagation de reports réagissant aux résultats de report de la logique arithmétique pour anticiper un zéro sur chacun des N bits de poids le plus faible d'un résultat arithmétique pour générer un signal de sortie d'anticipation de zéros, la logique d'arrondissement au plus près réagissant au signal de sortie pour imposer la valeur de zéro logique au $(N+1)^{ème}$ bit de poids le plus faible du résultat lorsqu'un zéro logique est anticipé pour les N bits de poids le plus faible du résultat.

**4.** Unité arithmétique selon l'une quelconque des revendications précédentes, dans laquelle la logique d'arrondissement au plus près peut être mise en place sélectivement pour effectuer un arrondissement au plus près.

**5.** Unit arithmétique selon l'une quelconque des revendications précédentes, dans laquelle la logique d'arrondissement au plus près comporte un multiplexeur réagissant sélectivement à un signal de sélection d'arrondissement au plus près pour permettre d'imposer au $(N+1)^{ème}$ bit la valeur logique zéro.

**6.** Unité arithmétique selon l'une quelconque des revendications précédentes, dans laquelle celle-ci est une unité de multiplication et de cumul comportant une arborescence de réduction de produits partiels fournissant les résultats des reports, un additionneur final connecté à l'arborescence de réduction des produits partiels qui conserve le résultat.

**7.** Unité arithmétique selon la revendication 6, dans laquelle l'unité de multiplication et de cumul effectue la multiplication par bit de X par Y avec cumul sur M bits.

**8.** Unité arithmétique selon la revendication 7, dans laquelle X=Y=17 et M=40.

**9.** Unité arithmétique selon l'une quelconque des revendications précédentes, dans laquelle N=16.

**10.** Unité arithmétique selon l'une quelconque des revendications précédentes, dans laquelle ladite logique d'anticipation de résultat égal à zéro génère un autre signal de sortie pour lequel tous les bits du résultat ou un nombre prédéterminé, supérieur à N, de bits de poids le plus faible, sont des zéros logiques.

**11.** Unité arithmétique selon l'une quelconque des revendications 1 à 10, dans laquelle celle-ci est une unité à virgule fixe avec anticipation de dépassement de capacité.

**12.** Moteur de traitement comportant au moins une unité arithmétique selon l'une quelconque des revendications précédentes.

**13.** Moteur de traitement selon la revendication 12 se présentant sous la forme d'un processeur de signaux numériques.

**14.** Circuit intégré comportant un moteur de traitement selon la revendication 12 ou la revendication 13.

**15.** Appareil de télécommunications comportant un moteur de traitement selon la revendication 12 ou 13.

**16.** Appareil de télécommunications selon la revendication 15, comportant un dispositif d'entrée d'utilisateur, un dispositif d'affichage, une interface de télécommunications sans fil et une antenne.

**17.** Procédé d'arrondissement au plus près dans une unité arithmétique de moteur de traitement, le procédé comprenant:

la réalisation d'une opération arithmétique (476 - figure 25) pour générer un résultat arithmétique;

**caractérisé par**:

l'anticipation (472 - figure 25) d'un zéro logique sur les N bits de poids le plus faible du résultat en réaction à des opérandes d'entrée;
l'arrondissement du résultat en imposant la valeur zéro aux N bits de poids le plus faible du résultat en réaction à un signal d'arrondissement (Rnd - Figure 28B);
l'attribution d'une valeur logique prédéterminée au $(N+1)^{ème}$ bit de poids le plus faible du résultat pour lequel un zéro logique (477 - figure 25) est anticipé sur les N bits de poids le plus faible du résultat en réaction à un signal de mode d'arrondissement au plus près (URM - figure 28C).

**18.** Procédé selon la revendication 17, dans lequel la valeur logique prédéterminée est zéro.

**19.** Procédé selon la revendication 17 ou 18, dans lequel l'anticipation des zéros se fait par propagation des reports dans une arborescence de propagation des reports en réaction aux résultats des reports de la logique arithmétique et par génération d'un signal de sortie où un zéro logique est anticipé sur les N bits de poids le plus faible du résultat.

**20.** Procédé selon la revendication 19 comprenant l'application sélective d'un arrondissement au plus près pour permettre d'imposer la valeur zéro au $(N+1)^{ème}$ bit quand un zéro logique est anticipé pour les N bits de poids le plus faible.

**21.** Procédé selon l'une quelconque des revendications 17 à 20, dans lequel l'unité arithmétique est une unité de multiplication et de cumul comportant une arborescence de réduction de produits partiels fournissant les résultats des reports, un additionneur final connecté à l'arborescence de réduction des produits partiels qui conserve le résultat.

**22.** Procédé selon la revendication 21, dans lequel l'unité de multiplication et de cumul effectue une multiplication bit par bit de X par Y sur un cumul de M bits.

**23.** Procédé selon la revendication 22, dans lequel X=Y=17 et M=40.

**24.** Procédé selon l'une quelconque des revendications 17 à 23 dans lequel N est égal à 16.

**25.** Procédé selon l'une quelconque des revendications 17 à 24, générant en outre un résultat d'anticipation de zéros dans lequel tous les bits du résultat, ou un nombre prédéterminé supérieur à N des bits de poids le plus faible, sont préétablis pour être des zéros logiques.

**26.** Procédé selon la revendication 18, dans lequel l'étape de réalisation d'une opération arithmétique comporte l'addition d'une valeur de $2^N$ au résultat arithmétique quand l'arrondissement est validé.

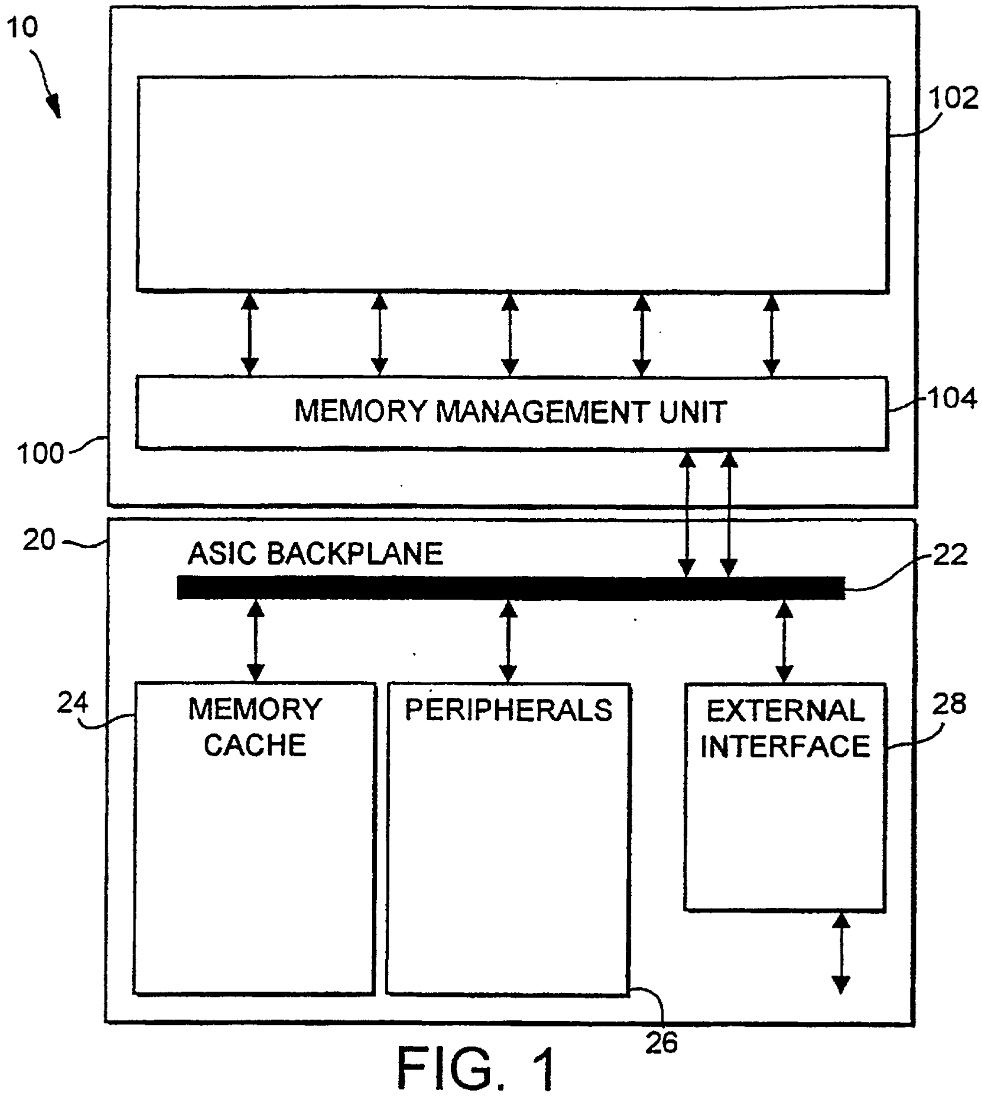
10
102
MEMORY MANAGEMENT UNIT
104
100
20
ASIC BACKPLANE
22
24
MEMORY CACHE
PERIPHERALS
EXTERNAL INTERFACE
28
26

FIG. 1

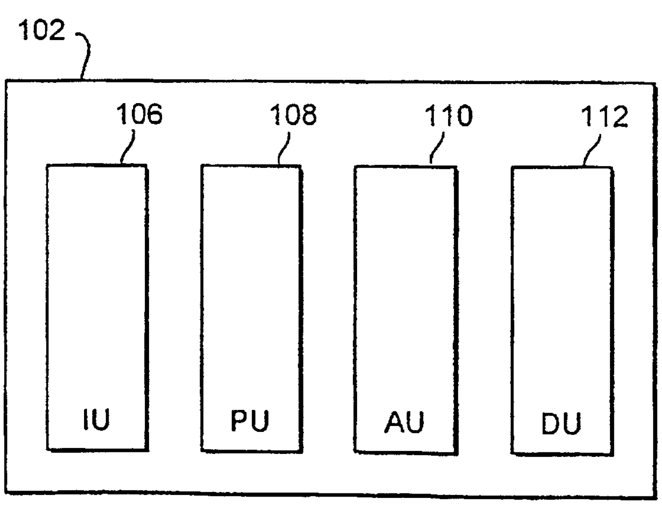
102
106
108
110
112
IU
PU
AU
DU

FIG. 2

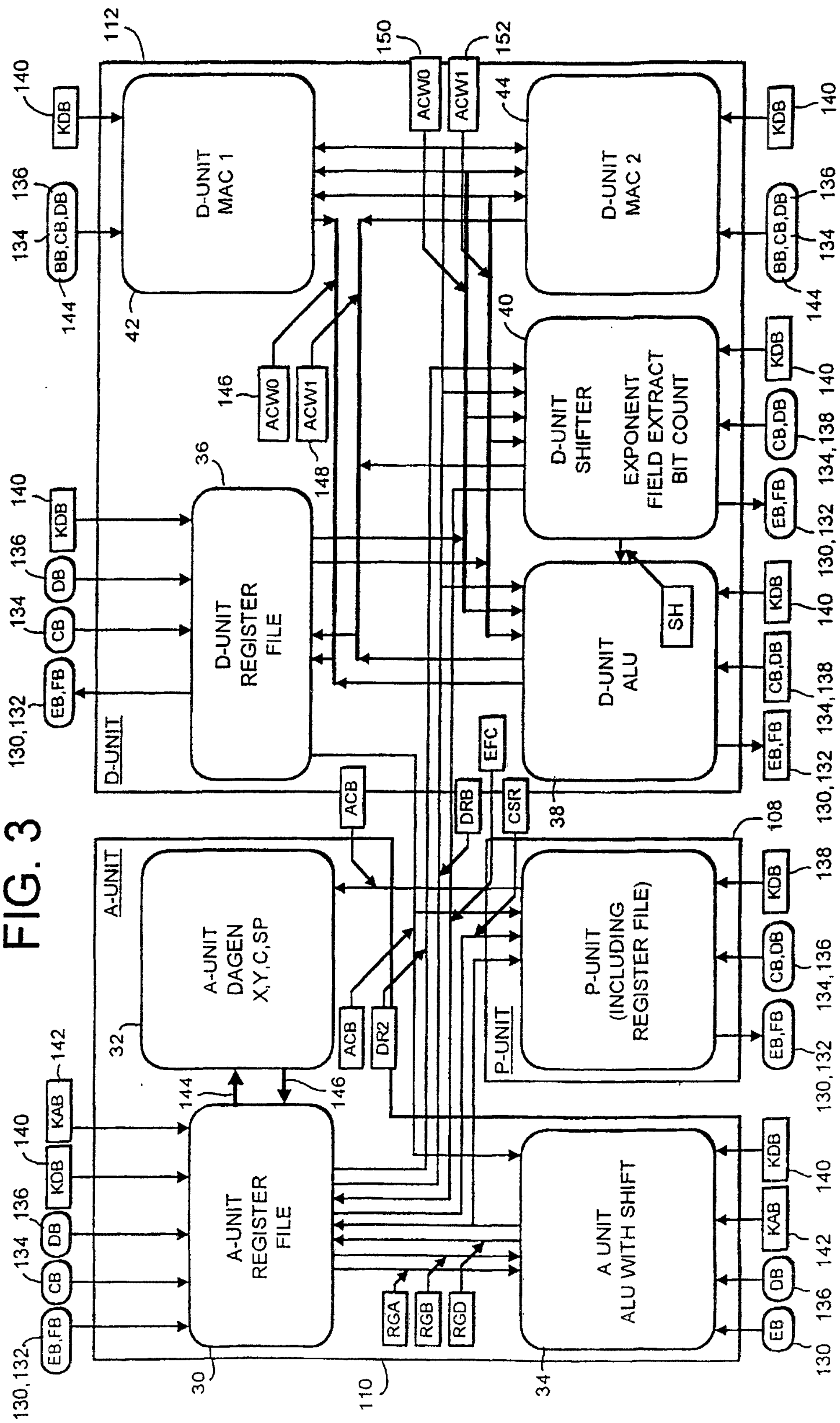
D-UNIT
D-UNIT MAC 1
D-UNIT MAC 2
D-UNIT REGISTER FILE
D-UNIT SHIFTER
EXPONENT FIELD EXTRACT BIT COUNT
D-UNIT ALU
SH
A-UNIT
A-UNIT DAGEN X,Y,C,SP
A-UNIT REGISTER FILE
A UNIT ALU WITH SHIFT
P-UNIT
P-UNIT (INCLUDING REGISTER FILE)
KDB
BB,CB,DB
CB,DB
EB,FB
CB
DB
EB
KAB
ACW0
ACW1
ACB
DRB
EFC
CSR
DR2
RGA
RGB
RGD
30
32
34
36
38
40
42
44
108
110
112
130
130,132
134
134,136
134,138
136
138
140
142
144
146
148
150
152

FIG. 3

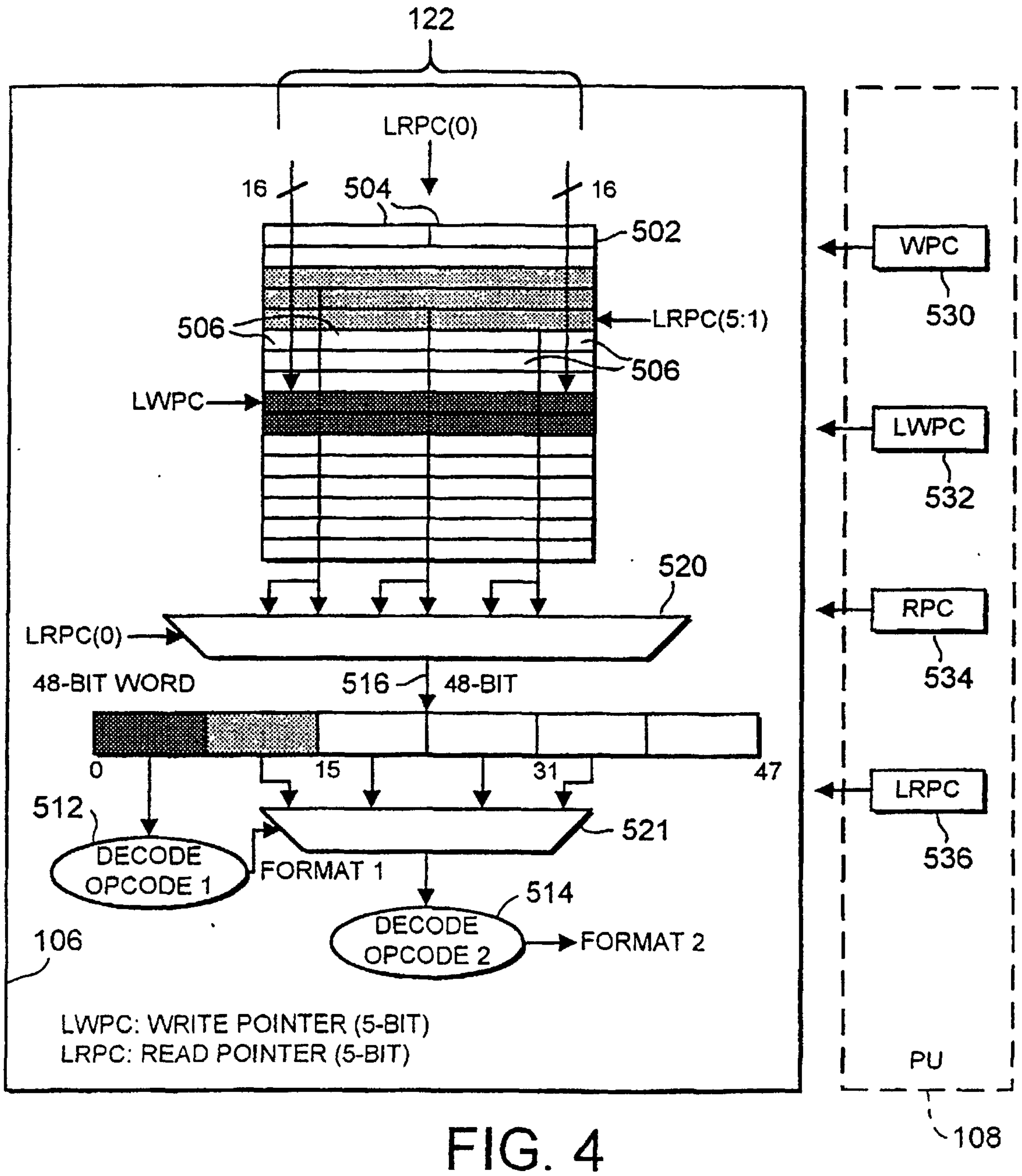
122
LRPC(0)
16
504
16
502
506
LRPC(5:1)
506
LWPC
520
LRPC(0)
48-BIT WORD
516
48-BIT
0
15
31
47
512
521
DECODE OPCODE 1
FORMAT 1
514
DECODE OPCODE 2
FORMAT 2
106
LWPC: WRITE POINTER (5-BIT)
LRPC: READ POINTER (5-BIT)
WPC
530
LWPC
532
RPC
534
LRPC
536
PU
108

FIG. 4

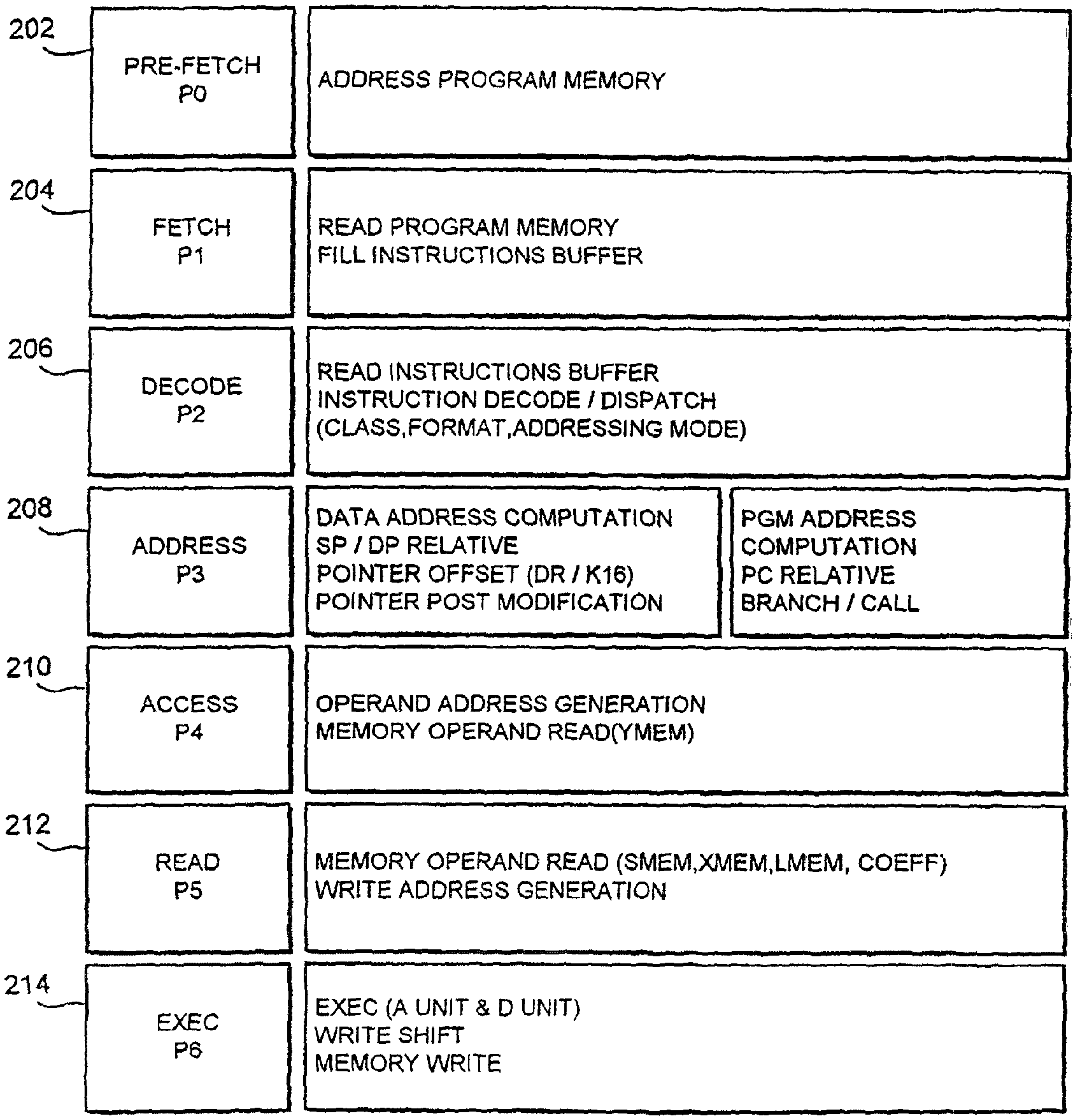
202
PRE-FETCH
P0
ADDRESS PROGRAM MEMORY
204
FETCH
P1
READ PROGRAM MEMORY
FILL INSTRUCTIONS BUFFER
206
DECODE
P2
READ INSTRUCTIONS BUFFER
INSTRUCTION DECODE / DISPATCH
(CLASS,FORMAT,ADDRESSING MODE)
208
ADDRESS
P3
DATA ADDRESS COMPUTATION
SP / DP RELATIVE
POINTER OFFSET (DR / K16)
POINTER POST MODIFICATION
PGM ADDRESS
COMPUTATION
PC RELATIVE
BRANCH / CALL
210
ACCESS
P4
OPERAND ADDRESS GENERATION
MEMORY OPERAND READ(YMEM)
212
READ
P5
MEMORY OPERAND READ (SMEM,XMEM,LMEM, COEFF)
WRITE ADDRESS GENERATION
214
EXEC
P6
EXEC (A UNIT & D UNIT)
WRITE SHIFT
MEMORY WRITE

FIG. 5

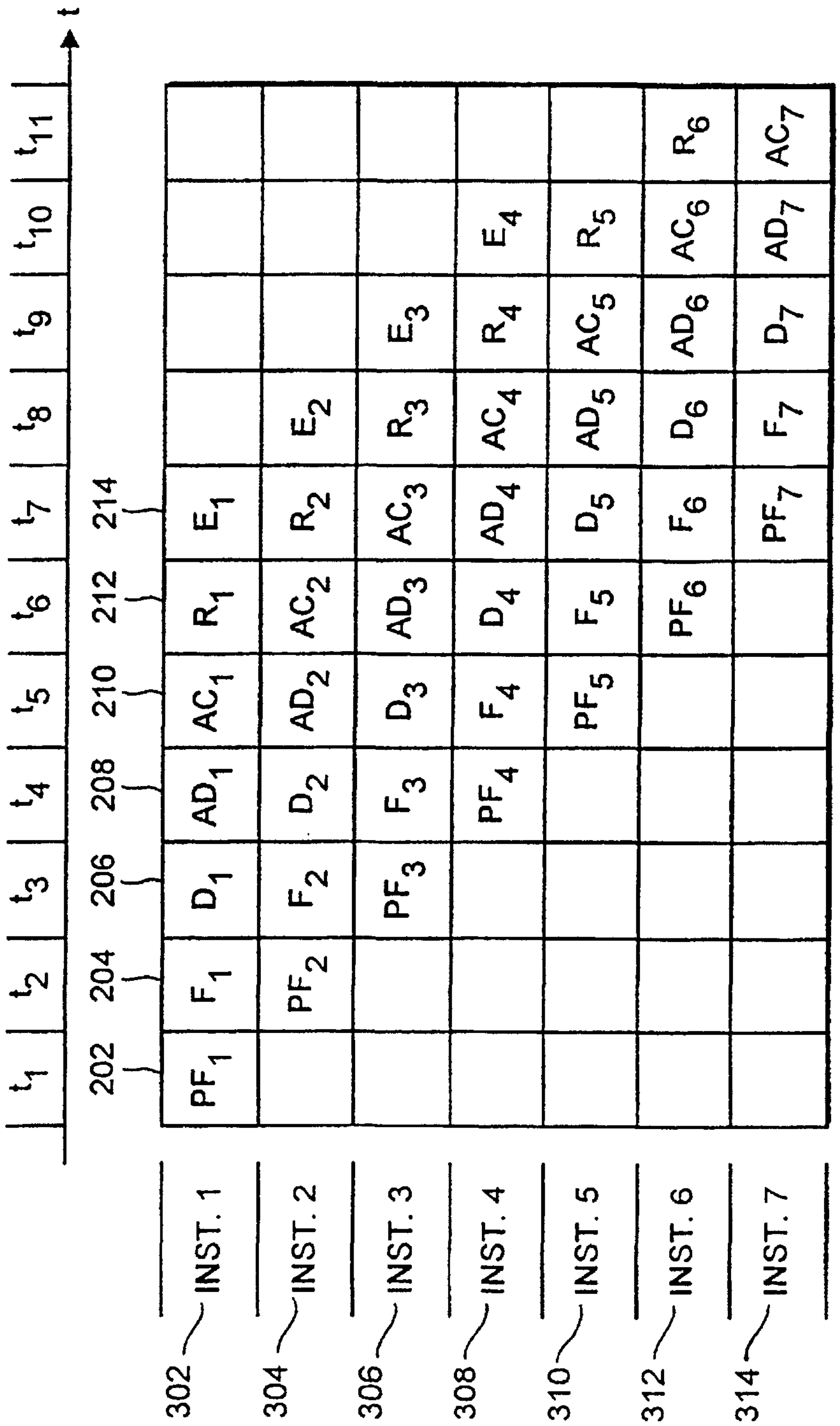
t
t1
t2
t3
t4
t5
t6
t7
t8
t9
t10
t11
202
204
206
208
210
212
214
PF1
F1
D1
AD1
AC1
R1
E1
PF2
F2
D2
AD2
AC2
R2
E2
PF3
F3
D3
AD3
AC3
R3
E3
PF4
F4
D4
AD4
AC4
R4
E4
PF5
F5
D5
AD5
AC5
R5
PF6
F6
D6
AD6
AC6
R6
PF7
F7
D7
AD7
AC7
302
INST. 1
304
INST. 2
306
INST. 3
308
INST. 4
310
INST. 5
312
INST. 6
314
INST. 7

FIG. 6

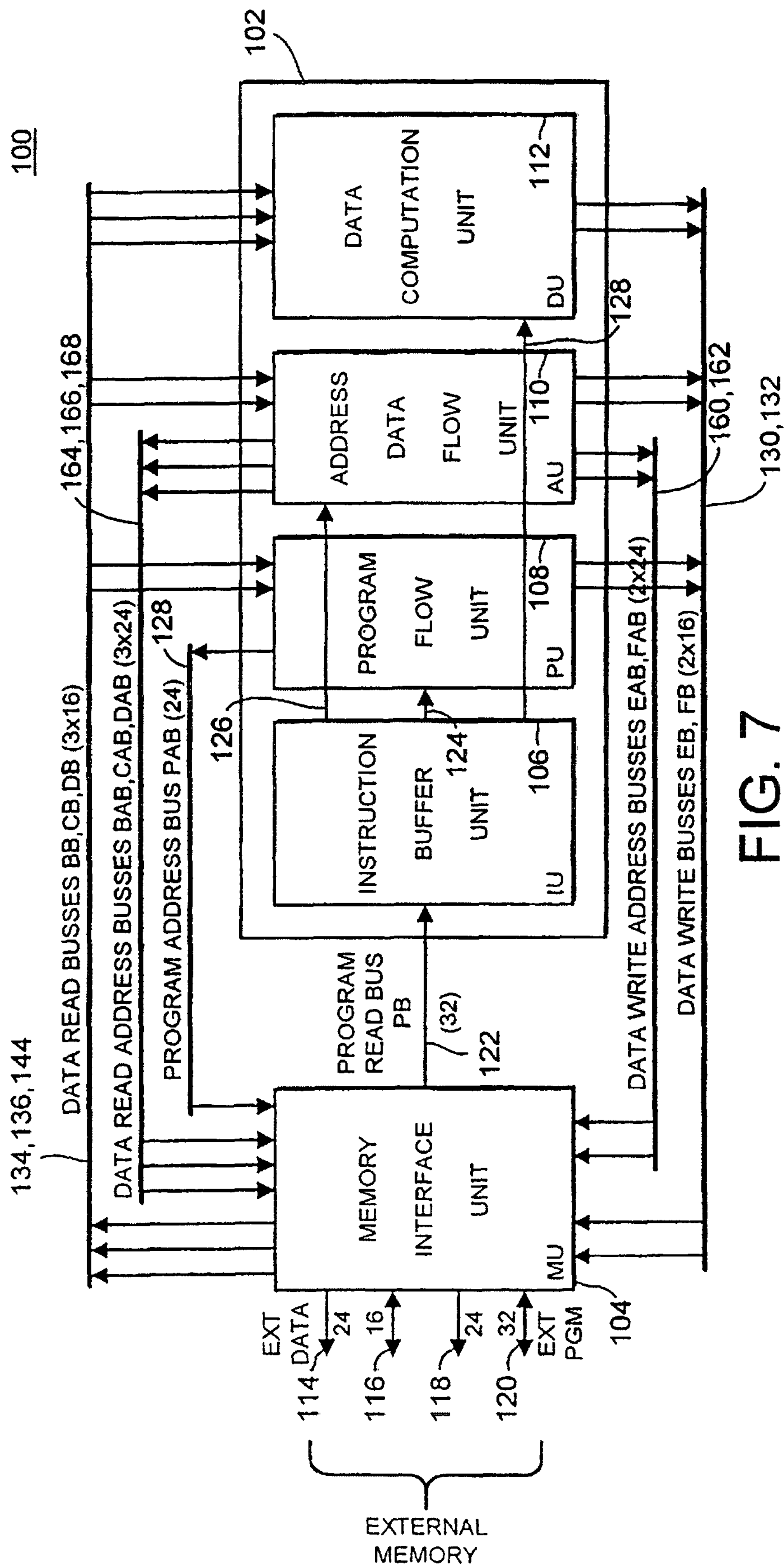
100
102
DATA COMPUTATION UNIT
112
DU
ADDRESS DATA FLOW UNIT
110
AU
PROGRAM FLOW UNIT
108
PU
INSTRUCTION BUFFER UNIT
106
IU
124
126
128
MEMORY INTERFACE UNIT
MU
104
164,166,168
160,162
130,132
134,136,144
DATA READ BUSSES BB,CB,DB (3x16)
DATA READ ADDRESS BUSSES BAB,CAB,DAB (3x24)
PROGRAM ADDRESS BUS PAB (24)
PROGRAM READ BUS PB
(32)
122
DATA WRITE ADDRESS BUSSES EAB,FAB (2x24)
DATA WRITE BUSSES EB, FB (2x16)
EXT DATA
24
16
24
32
EXT PGM
114
116
118
120
EXTERNAL MEMORY

FIG. 7

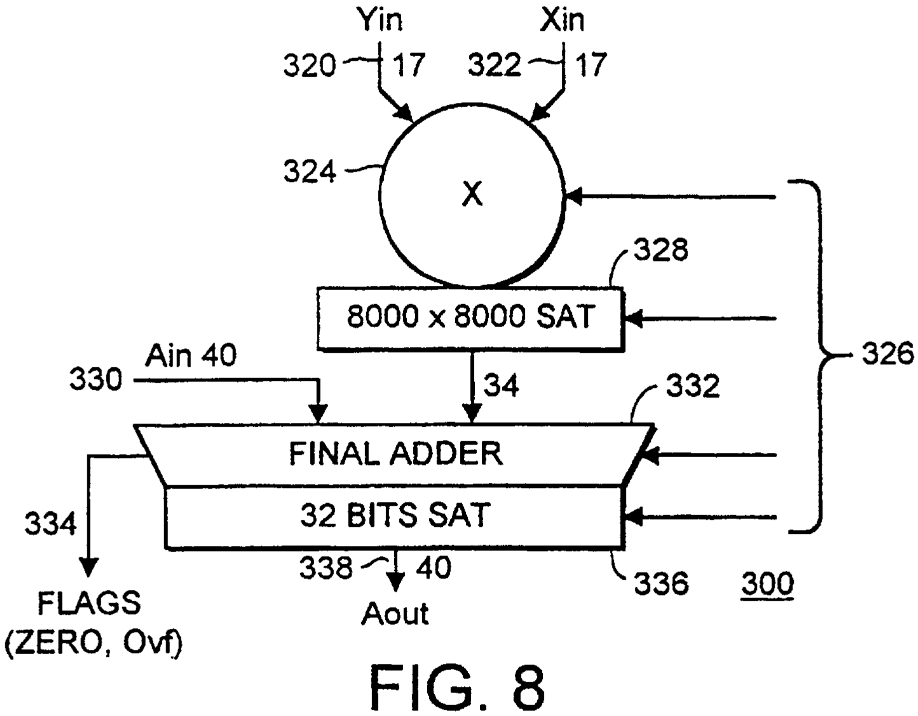


FIG. 8

| $Y_{i+1}$ $Y_i$ $Y_{i-1}$ | p2 p1 sg | FUNCTION |
|---|---|---|
| 0 0 0 | 0 0 0 | 0* MULTIPLICAND |
| 0 0 1 | 0 1 0 | 1* MULTIPLICAND |
| 0 1 0 | 0 1 0 | 1* MULTIPLICAND |
| 0 1 1 | 1 0 0 | 2* MULTIPLICAND |
| 1 0 0 | 1 0 1 | -2* MULTIPLICAND |
| 1 0 1 | 0 1 1 | -1* MULTIPLICAND |
| 1 1 0 | 0 1 1 | -1* MULTIPLICAND |
| 1 1 1 | 0 0 0 | 0* MULTIPLICAND |

FIG. 10

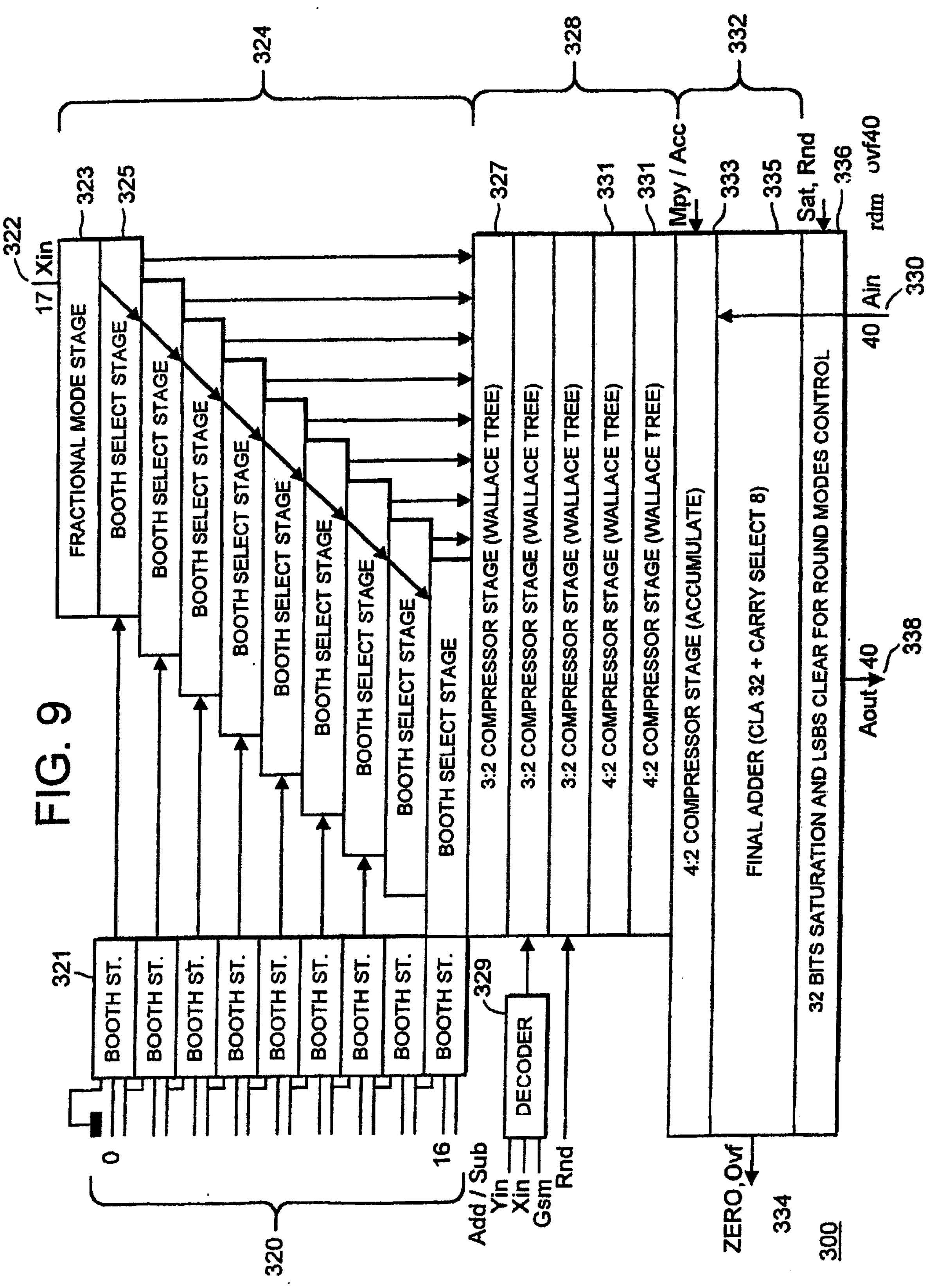
FRACTIONAL MODE STAGE
BOOTH SELECT STAGE
3:2 COMPRESSOR STAGE (WALLACE TREE)
4:2 COMPRESSOR STAGE (WALLACE TREE)
4:2 COMPRESSOR STAGE (ACCUMULATE)
FINAL ADDER (CLA 32 + CARRY SELECT 8)
32 BITS SATURATION AND LSBS CLEAR FOR ROUND MODES CONTROL
BOOTH ST.
DECODER
Add / Sub
Yin
Xin
Gsm
Rnd
Mpy / Acc
Sat, Rnd
rdm
ovf40
Ain
Aout
ZERO,Ovf
17
40
0
16
320
321
322
323
324
325
327
328
329
330
331
332
333
334
335
336
338
300

FIG. 9

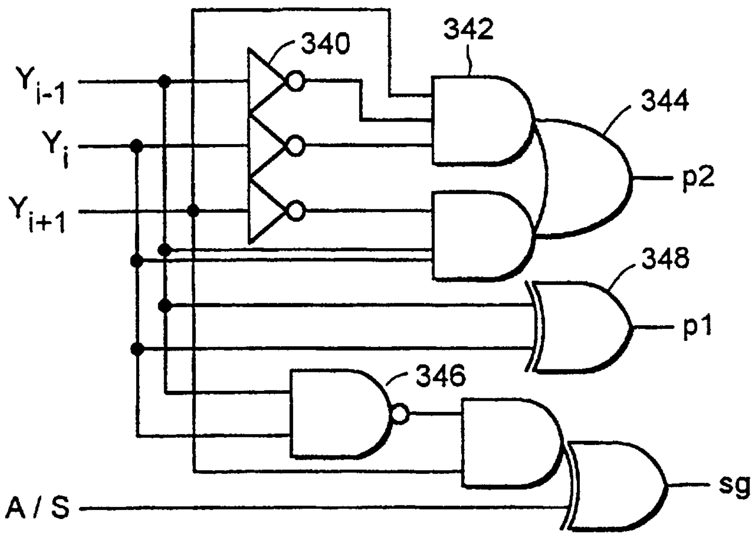


FIG. 11A

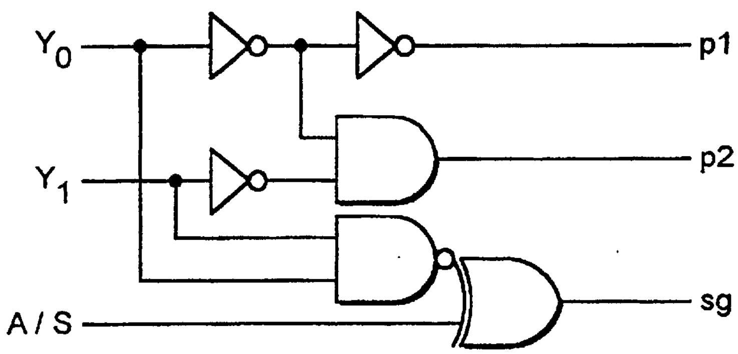


FIG. 11B

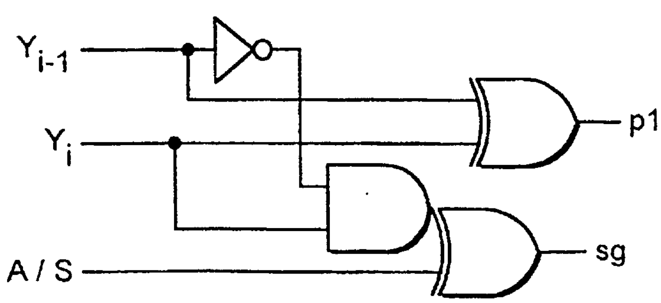


FIG. 11C

| p2 p1 sg | PP | FUNCTION |
|---|---|---|
| 0 0 0 | 0 | 0 |
| 0 1 0 | $X_i$ | 1* MULTIPLICAND |
| 1 1 0 | | DON'T CARE |
| 1 0 0 | $X_{i-1}$ | 2* MULTIPLICAND |
| 1 0 1 | $\overline{X_{i-1}}$ | -2* MULTIPLICAND |
| 0 1 1 | $\overline{X_i}$ | -1* MULTIPLICAND |
| 1 1 1 | | DON'T CARE |
| 0 0 0 | 1 | -1 |

FIG. 12

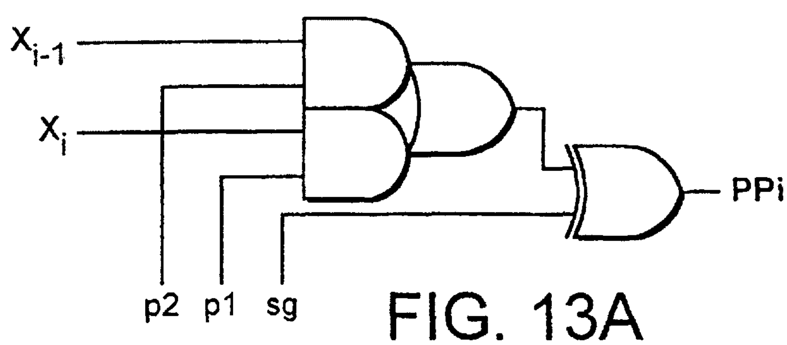


FIG. 13A

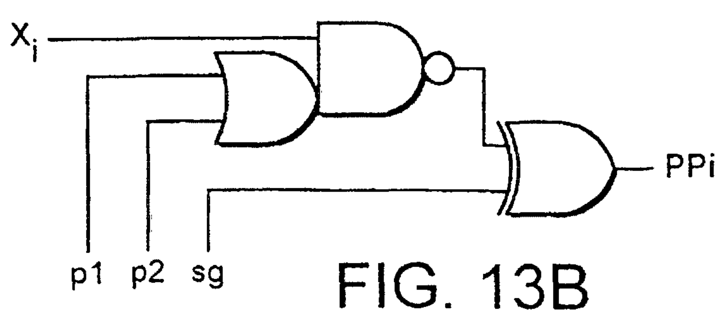


FIG. 13B

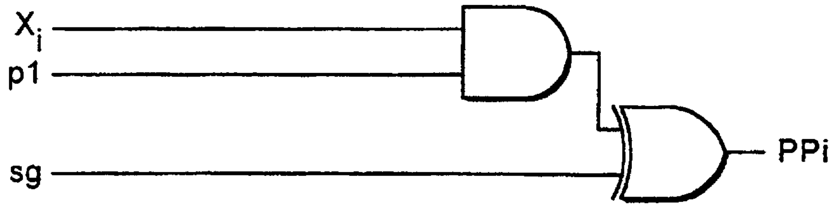


FIG. 13C

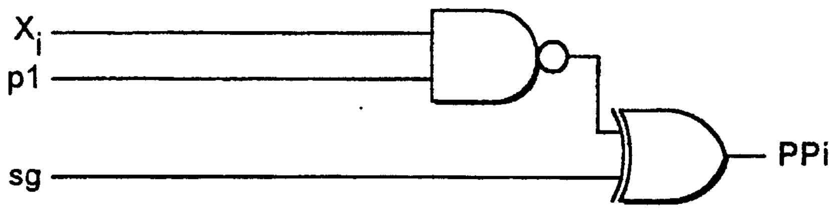


FIG. 13D

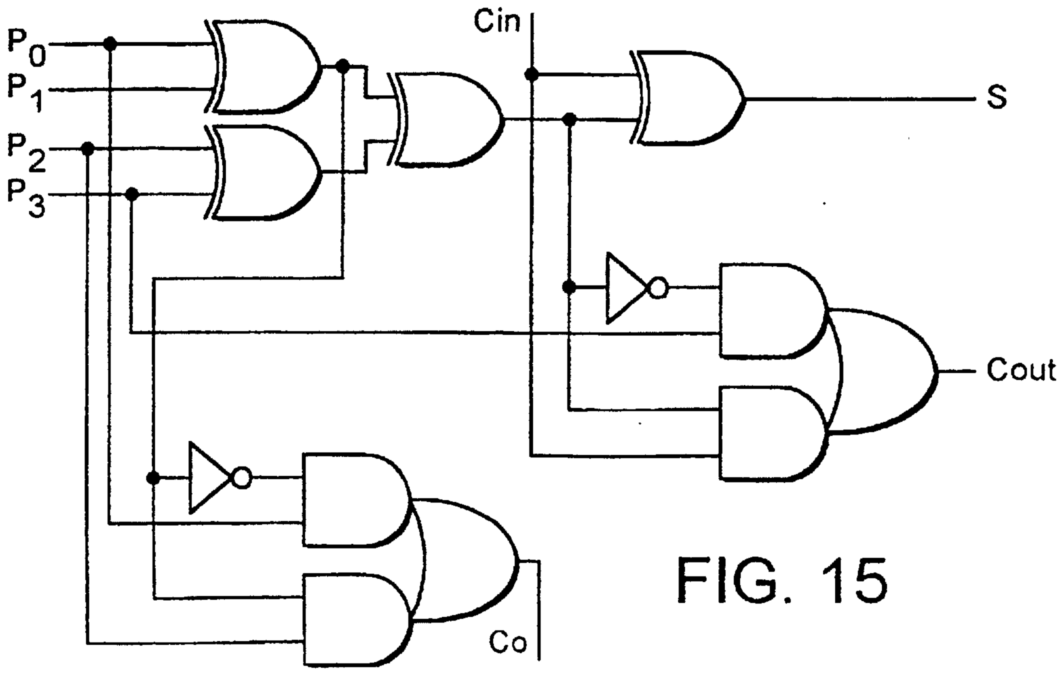


FIG. 15

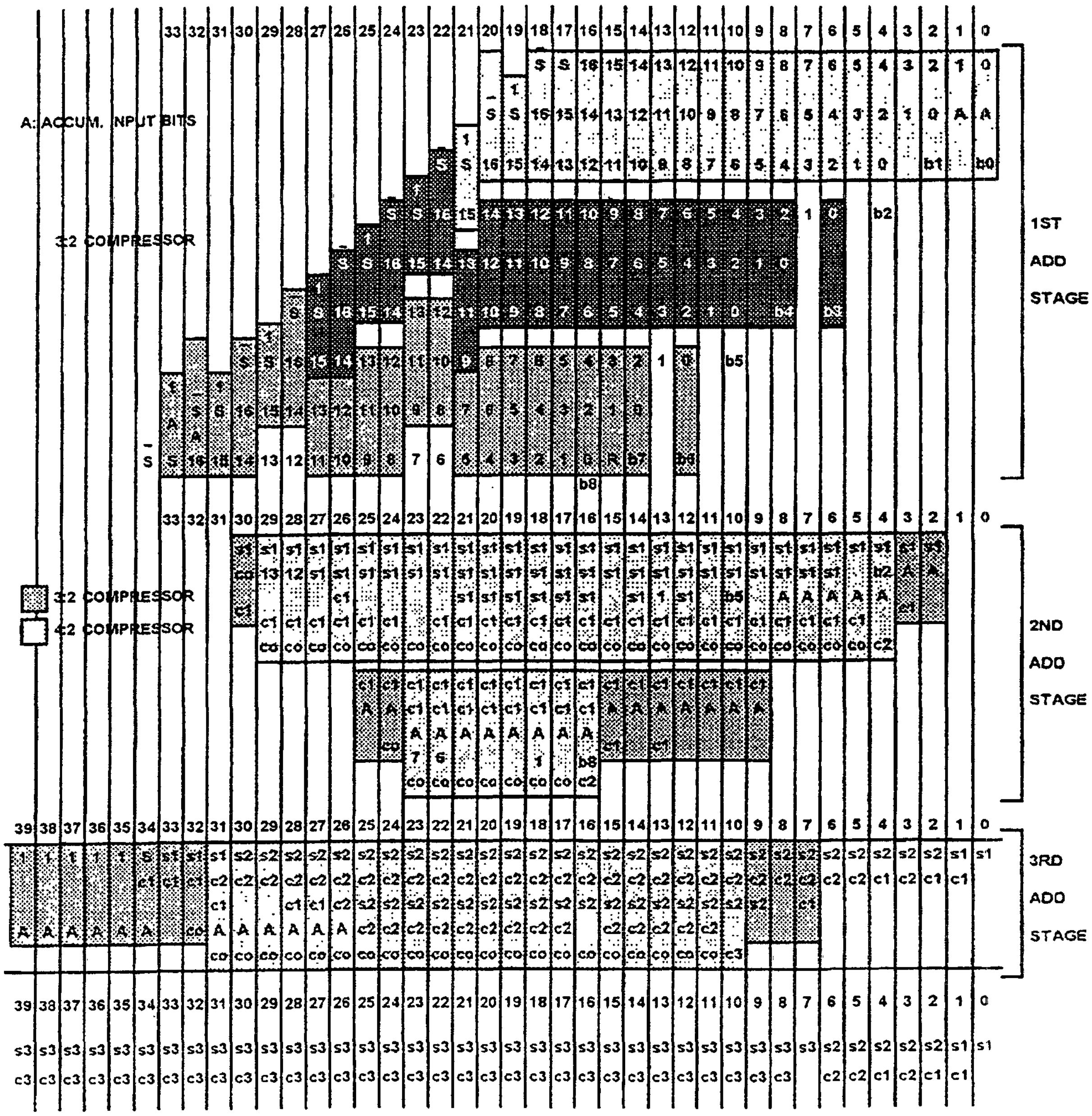
A: ACCUM. INPUT BITS
3:2 COMPRESSOR
1ST
ADD
STAGE
3:2 COMPRESSOR
4:2 COMPRESSOR
2ND
ADD
STAGE
3RD
ADD
STAGE

FIG. 14

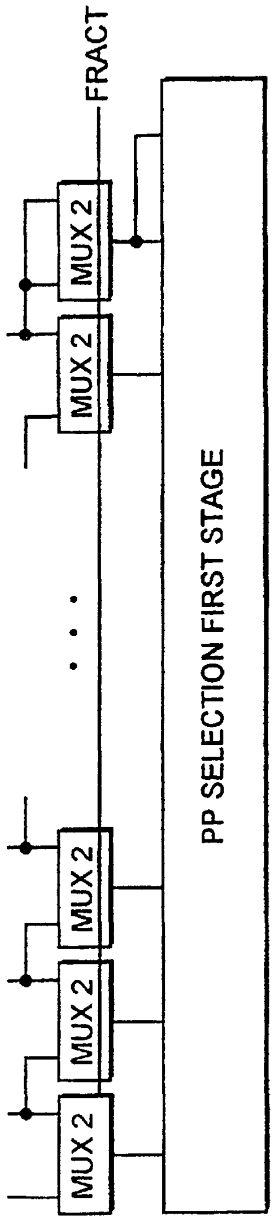
FRACT
MUX 2
MUX 2
MUX 2
MUX 2
MUX 2
MUX 2
PP SELECTION FIRST STAGE

FIG. 16

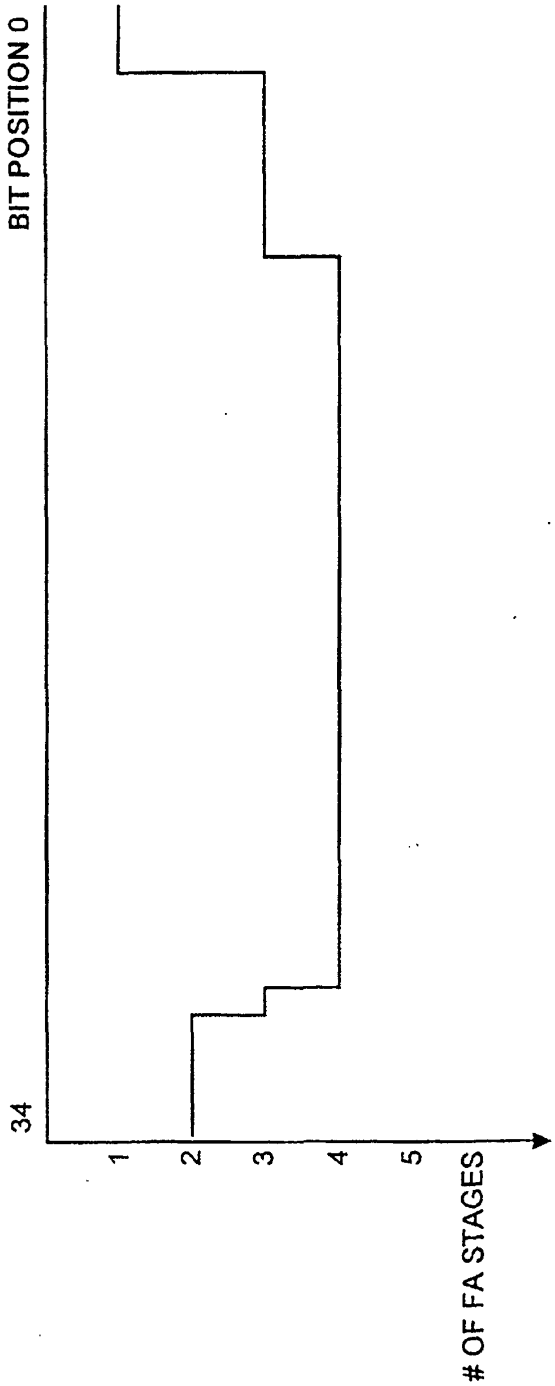
BIT POSITION 0
34
1
2
3
4
5
# OF FA STAGES

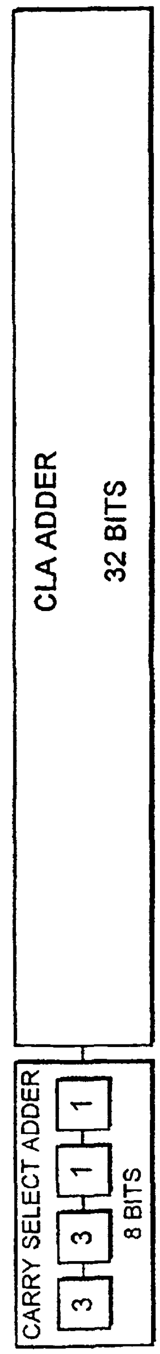
CARRY SELECT ADDER
3
3
1
1
8 BITS
CLA ADDER
32 BITS

FIG. 18

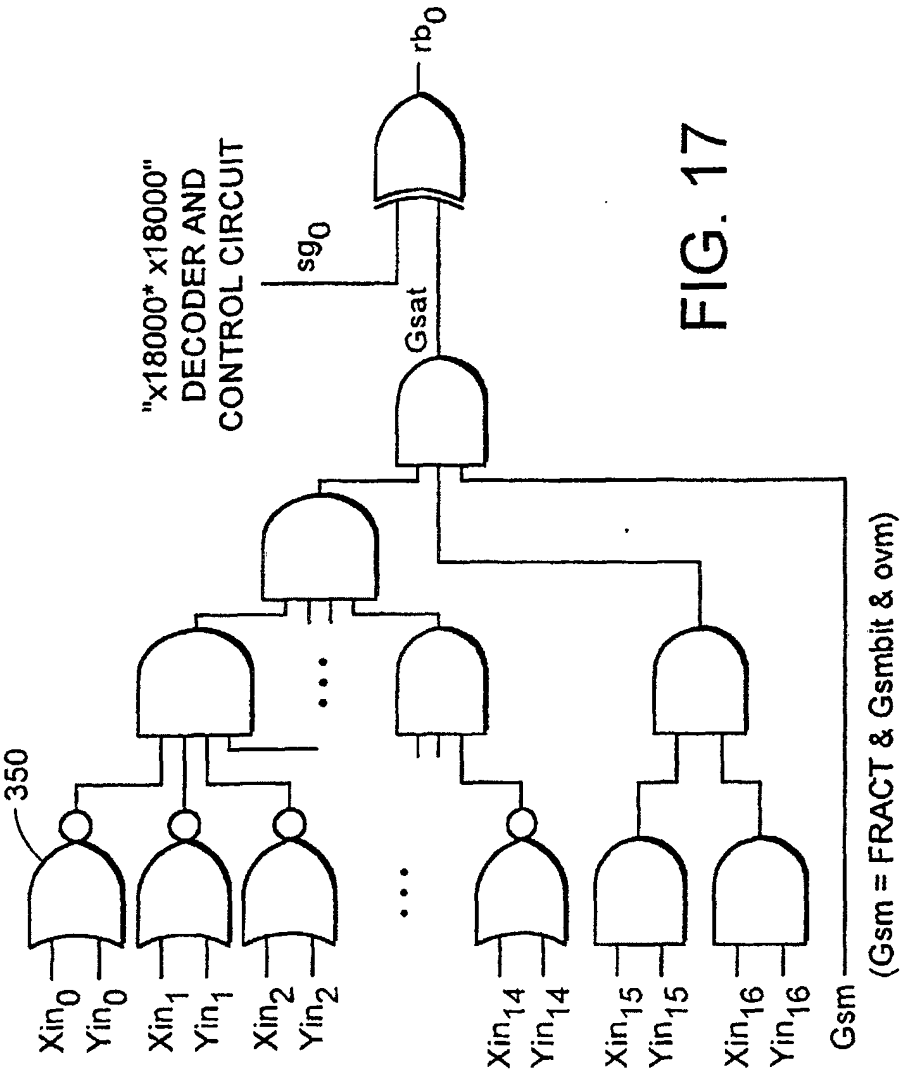
"x18000* x18000"
DECODER AND
CONTROL CIRCUIT
$sg_0$
$rb_0$
Gsat
350
$Xin_0$
$Yin_0$
$Xin_1$
$Yin_1$
$Xin_2$
$Yin_2$
$Xin_{14}$
$Yin_{14}$
$Xin_{15}$
$Yin_{15}$
$Xin_{16}$
$Yin_{16}$
Gsm
(Gsm = FRACT & Gsmbit & ovm)

FIG. 17

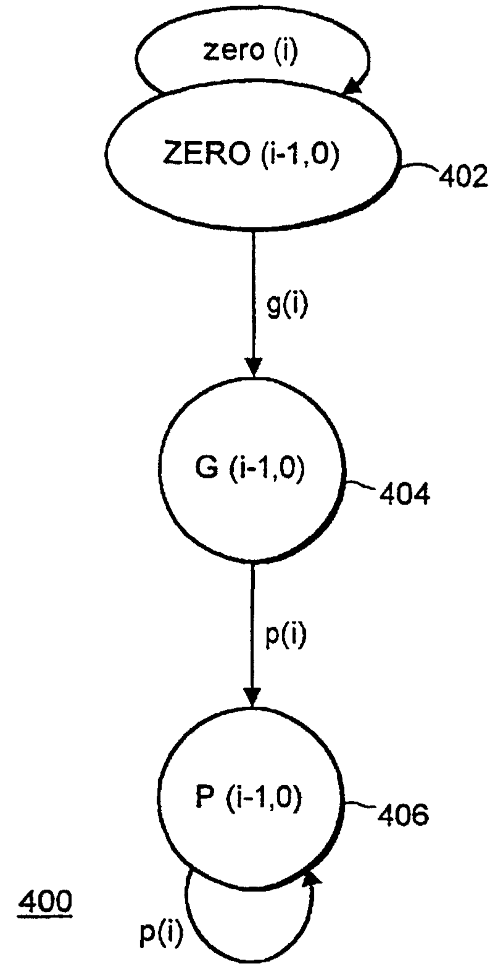


FIG. 19

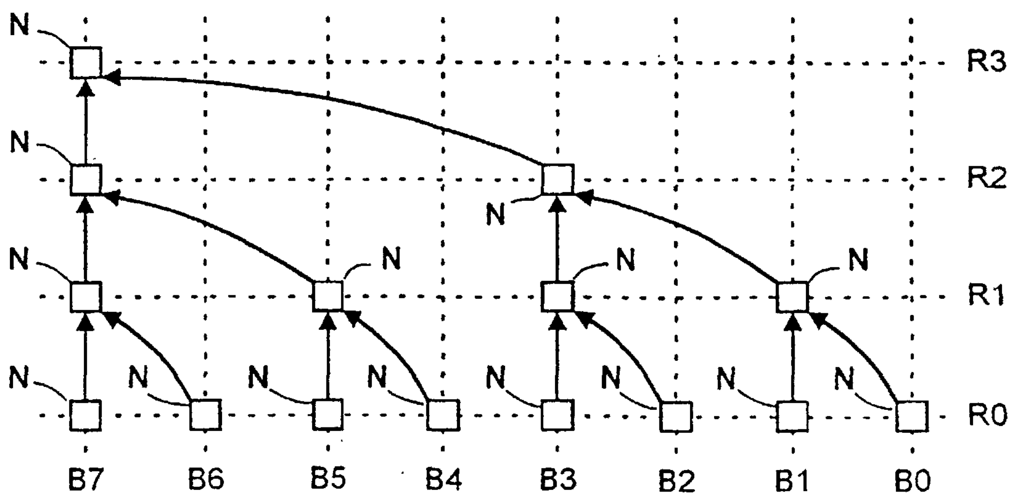


FIG. 20A

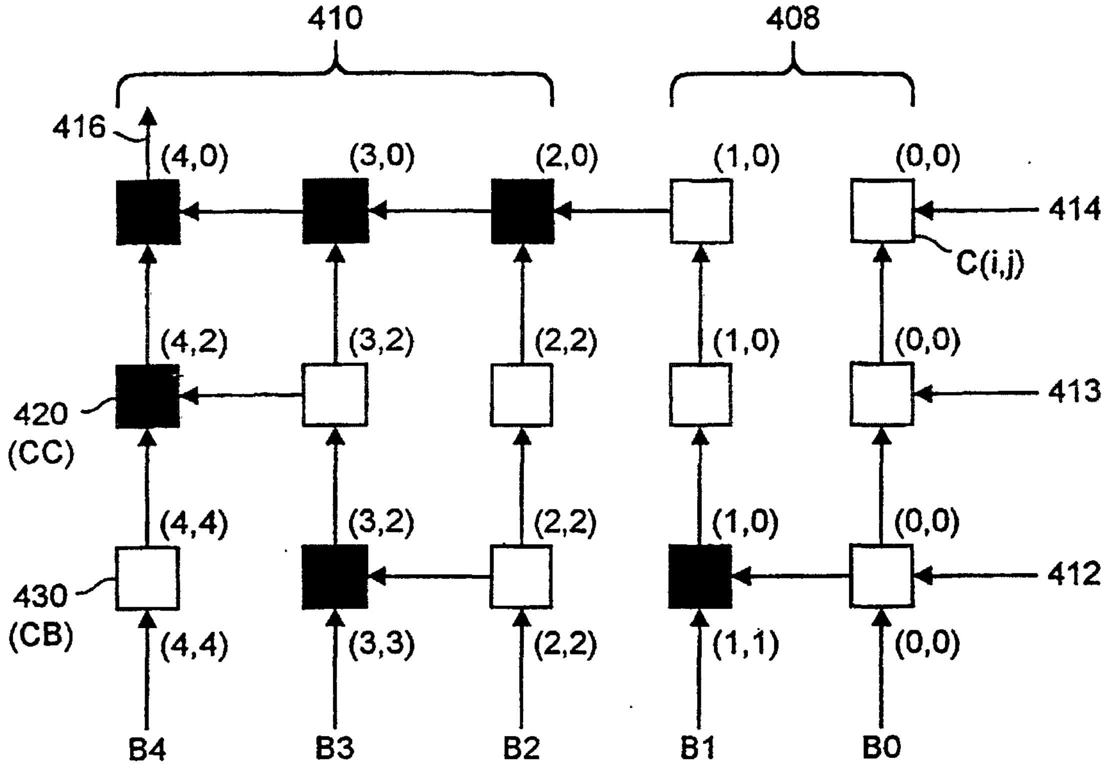


FIG. 20B

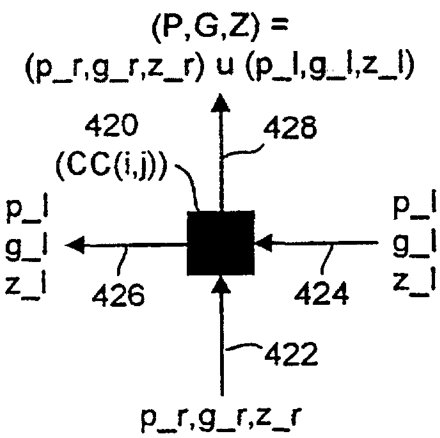


FIG. 21

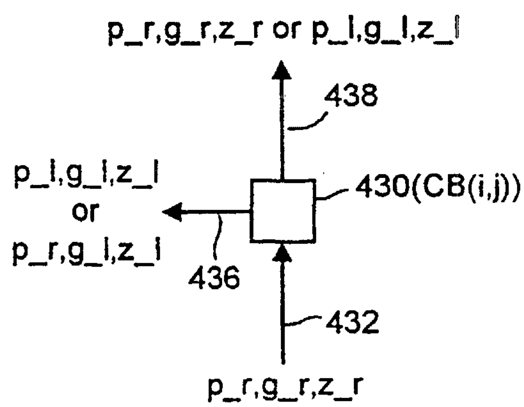


FIG. 22

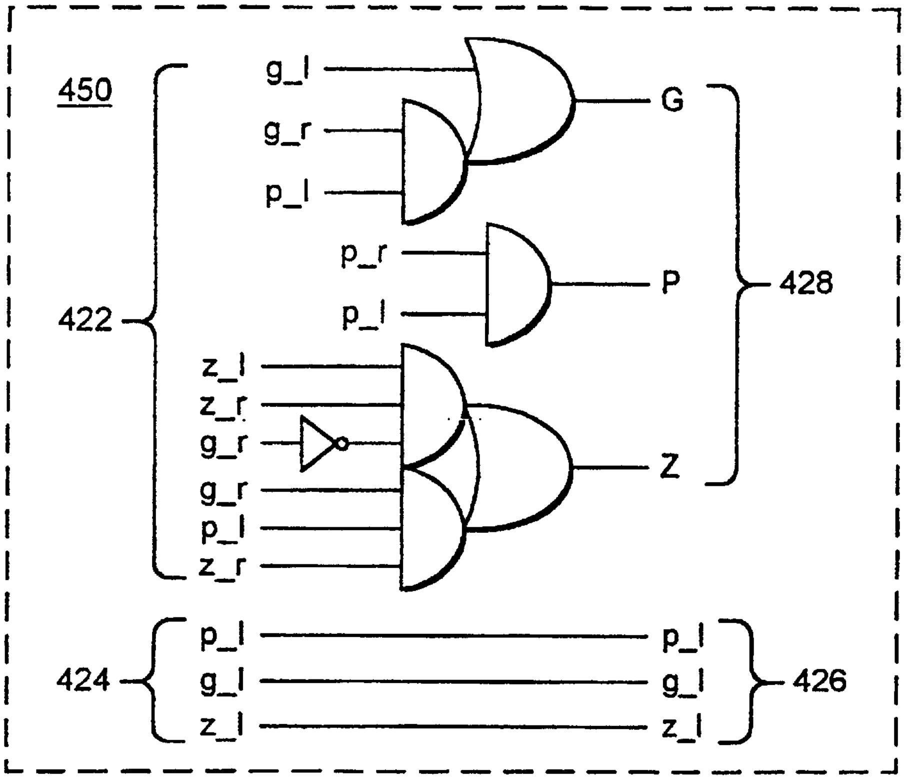
450
422
g_l
g_r
p_l
p_r
p_l
z_l
z_r
g_r
g_r
p_l
z_r
G
P
Z
428
424
p_l
g_l
z_l
p_l
g_l
z_l
426

FIG. 23

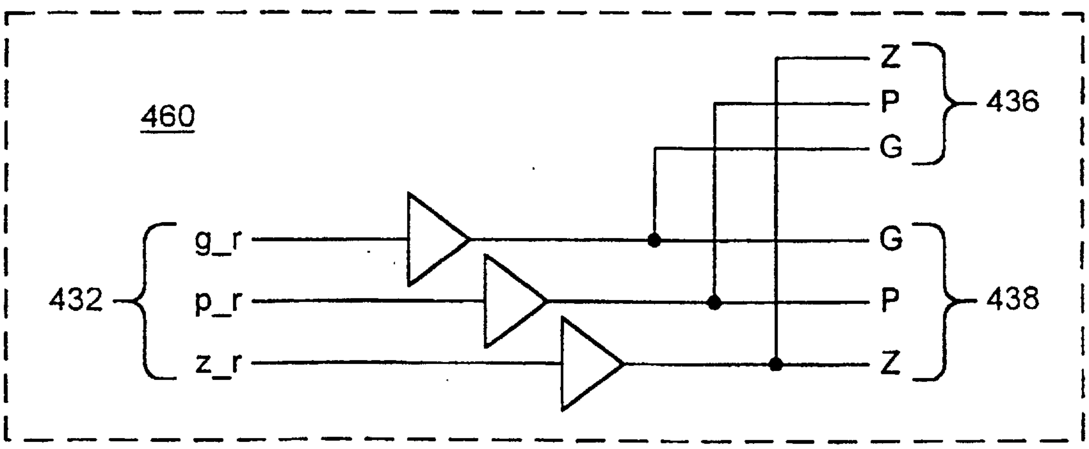
460
432
g_r
p_r
z_r
Z
P
G
436
G
P
Z
438

FIG. 24

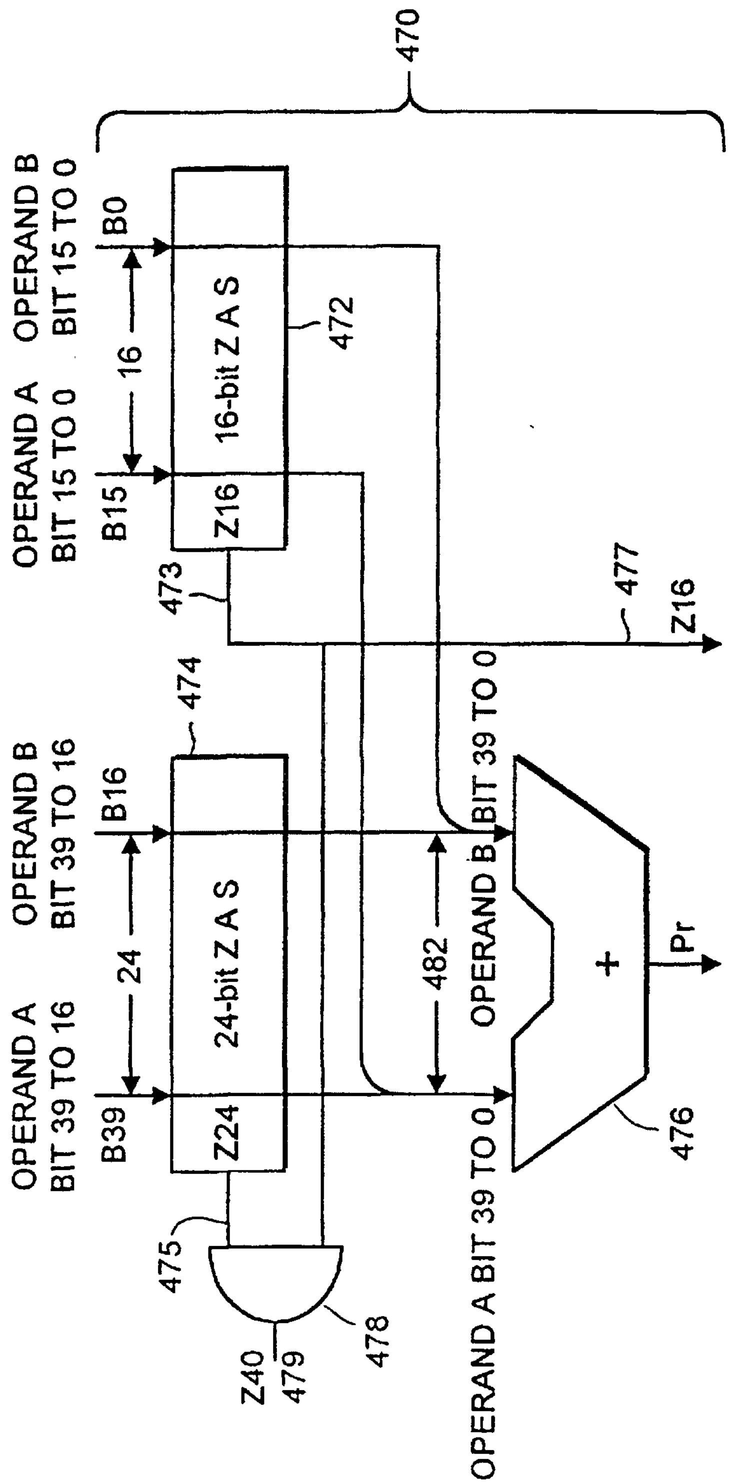
470
OPERAND A BIT 15 TO 0
OPERAND B BIT 15 TO 0
B15
B0
16
16-bit Z A S
Z16
472
473
477
Z16
OPERAND A BIT 39 TO 16
OPERAND B BIT 39 TO 16
B39
B16
24
24-bit Z A S
Z24
474
475
478
Z40
479
482
OPERAND B BIT 39 TO 0
OPERAND A BIT 39 TO 0
+
Pr
476

FIG. 25

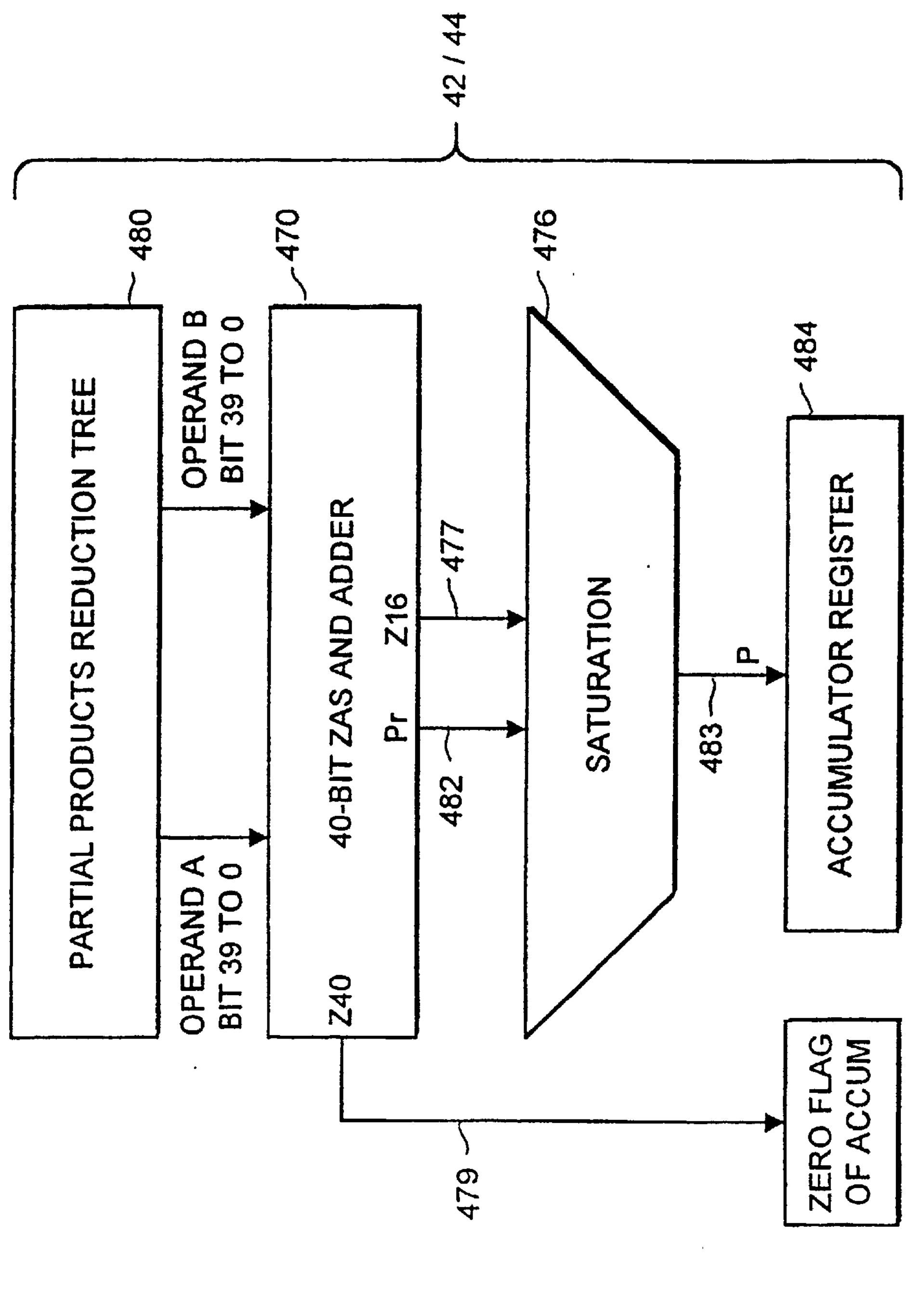
42 / 44
PARTIAL PRODUCTS REDUCTION TREE
480
OPERAND A
BIT 39 TO 0
OPERAND B
BIT 39 TO 0
40-BIT ZAS AND ADDER
470
Z40
Pr
Z16
482
477
SATURATION
476
483
P
ACCUMULATOR REGISTER
484
ZERO FLAG
OF ACCUM
479

FIG. 26

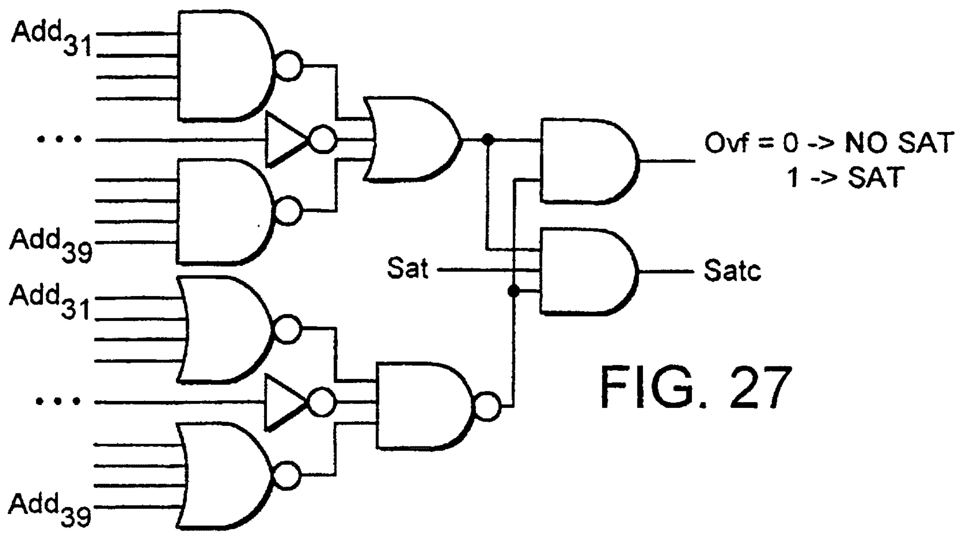


FIG. 27

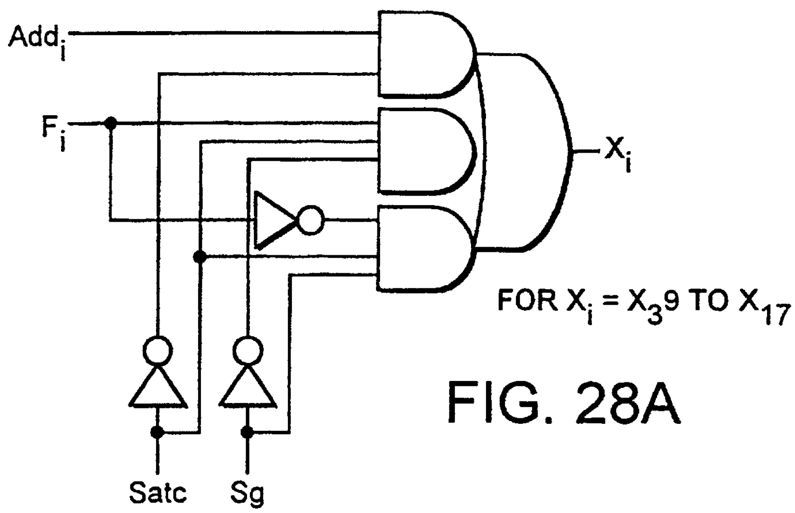


FIG. 28A

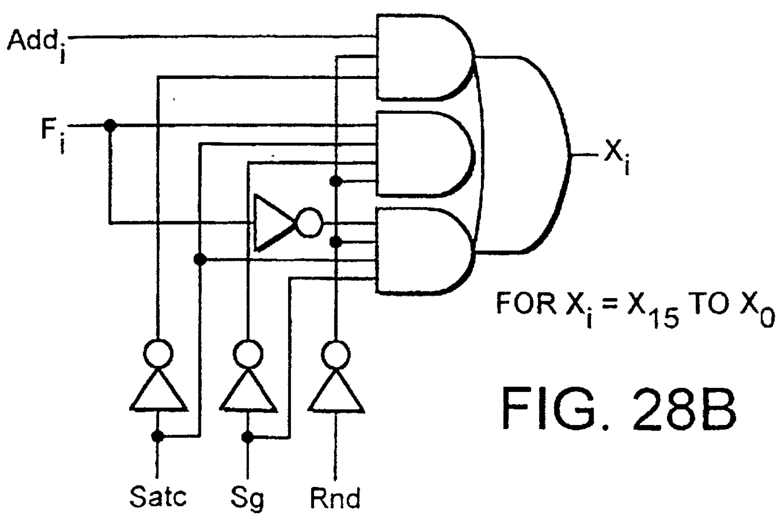


FIG. 28B

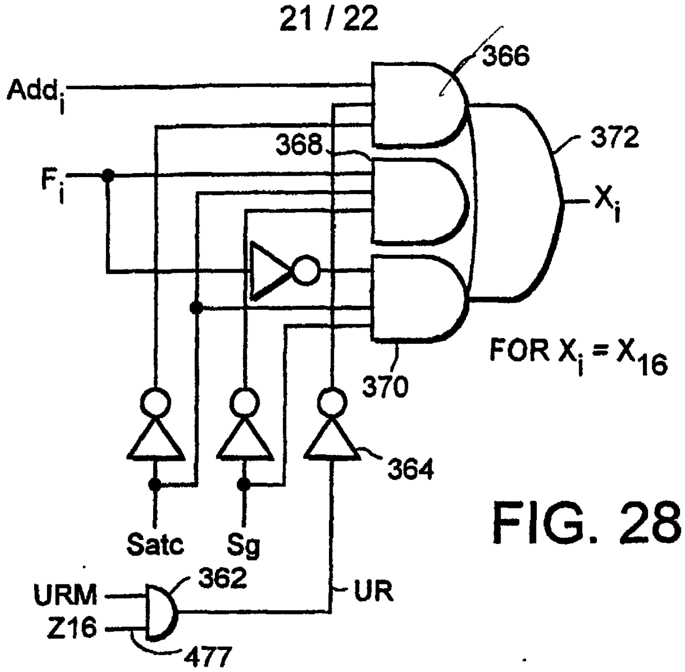


FIG. 28C

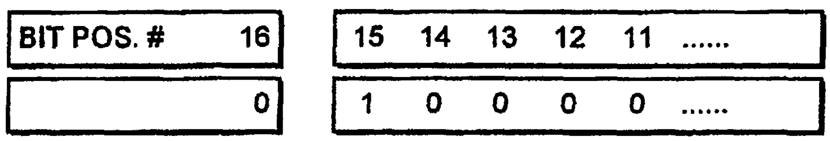


FIG. 29A

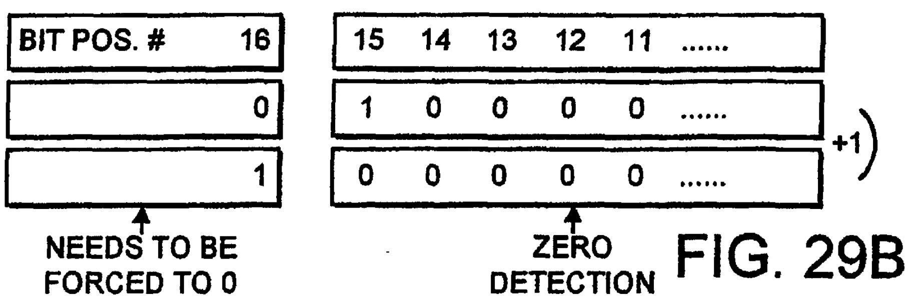


FIG. 29B

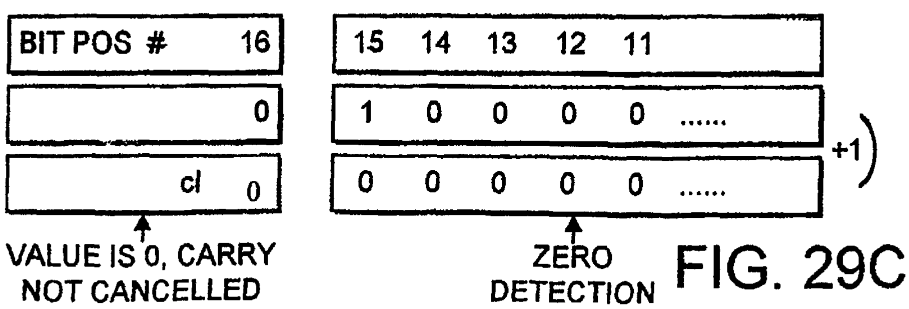


FIG. 29C

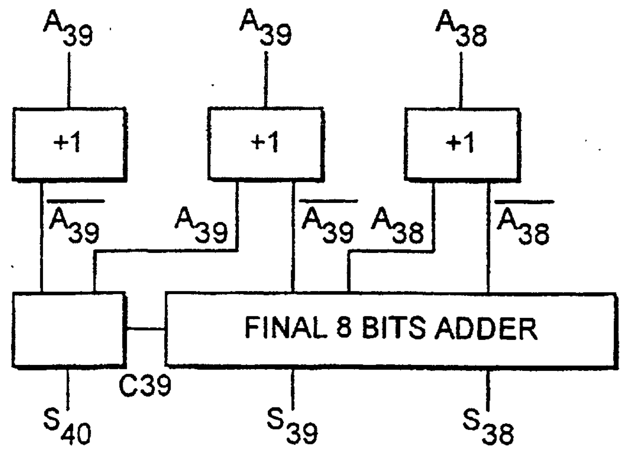


FIG. 30

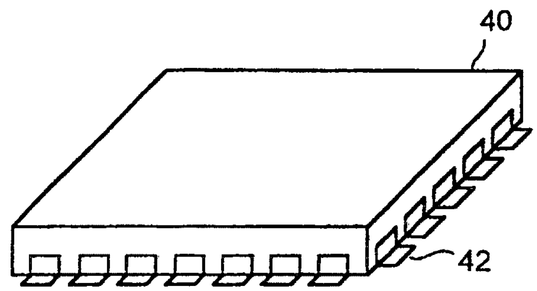


FIG. 31

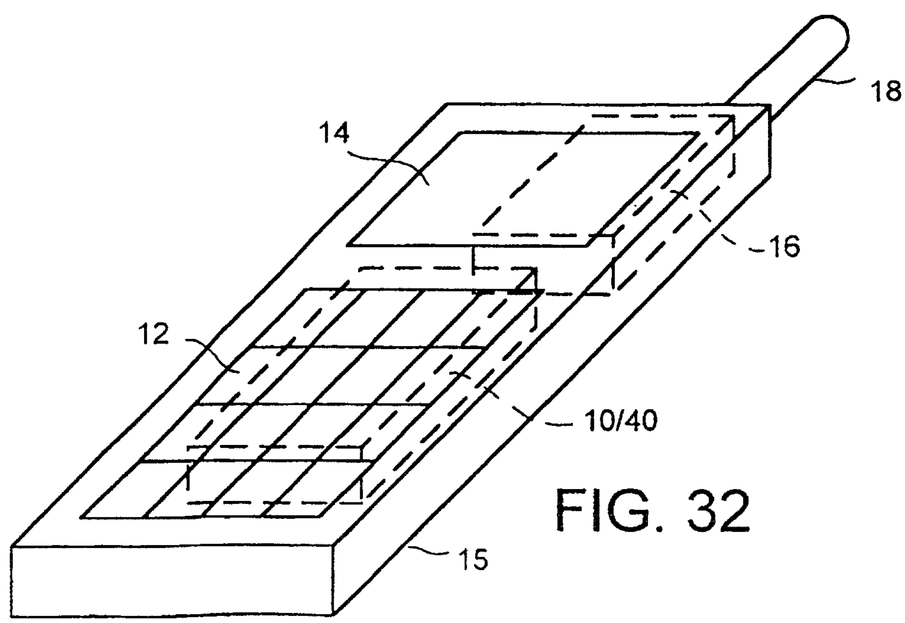


FIG. 32